# EUROPEAN PATENT APPLICATION

(11) **EP 4 622 181 A1**
(43) Date of publication of application: **24.09.2025**
(21) Application number: 23902529.9
(22) Date of filing: 04.12.2023
(51) Int. Cl.: H04L 12/18

(54) **COMMUNICATION METHOD, GATEWAY AND MANAGEMENT METHOD AND APPARATUS IN HYBRID CLOUD ENVIRONMENT**

(30) Priority: 12.12.2022 CN 202211598254; 04.04.2023 CN 202310354378
(71) Applicant: Huawei Cloud Computing Technologies Co., Ltd., Guiyang, Guizhou 550025 (CN)
(72) Inventor: WANG, Shaoyan, Shenzhen, Guangdong 518129 (CN); GAO, Zhonghua, Shenzhen, Guangdong 518129 (CN); WANG, Chang, Shenzhen, Guangdong 518129 (CN)
(74) Representative: Goddar, Heinz J.
(86) International application number: PCT/CN2023/136087
(87) International publication number: WO 2024/125332

(57) **Abstract**

The present invention provides a multicast communication method in a hybrid cloud environment, applied to a control platform. The control platform is configured for multicast communication between a first data center and a second data center, the first data center is configured to provide a public cloud service, the second data center is configured to provide a non-public cloud service, and the first data center is provided with a gateway. The method includes: The control platform obtains, from a multicast configuration interface, multicast member information for the gateway or a selection of enabling, for the gateway, a function of performing learning based on a layer 2 dynamic multicast protocol that is input by a tenant. The multicast configuration interface is disposed on the control platform. The control platform configures the gateway based on the foregoing descriptions. When the multicast member information is input, the control platform configures the gateway to record a correspondence between a multicast group and a multicast member; or when the selection of enabling, for the gateway, the function of performing learning based on the layer 2 dynamic multicast protocol is input, the control platform configures the gateway to enable the function. According to the foregoing solution, multicast communication between an on-cloud data center and an on-premises data center is implemented.

## Description

This application claims priority to Chinese Patent Application No. 202211598254.9, filed with the China National Intellectual Property Administration on December 12, 2022, and entitled "LAYER 2 GATEWAY SETTING METHOD BASED ON CLOUD COMPUTING TECHNOLOGY AND CLOUD SYSTEM", which is incorporated herein by reference in its entirety. This application claims priority to Chinese Patent Application No. 202310354378.0, filed with the China National Intellectual Property Administration on April 4, 2023, and entitled "COMMUNICATION METHOD, GATEWAY, AND MANAGEMENT METHOD AND APPARATUS IN HYBRID CLOUD ENVIRONMENT", which is incorporated herein by reference in its entirety.

### TECHNICAL FIELD

This application relates to the field of cloud technologies, and in particular, to a multicast communication method, a gateway, and a management method and apparatus in a hybrid cloud environment.

### BACKGROUND

With development of cloud technologies, many enterprises gradually migrate on-premises devices at an on-premises data center to a public cloud, and multicast communication between an on-cloud data center and the on-premises data center is required. However, in consideration of security, the multicast communication between the on-cloud data center and the on-premises data center cannot be performed currently, and this limits a communication scenario of a hybrid cloud.

### SUMMARY

To resolve a problem in the conventional technology, this application provides a multicast communication method and apparatus in a hybrid cloud environment, to effectively resolve a technical problem that multicast communication cannot be performed between an on-cloud data center and an on-premises data center.

According to a first aspect, this application provides a multicast communication method in a hybrid cloud environment. The method is applied to a control platform, the control platform is configured for multicast communication between a first data center and a second data center, the first data center is configured to provide a public cloud service, the second data center is configured to provide a non-public cloud service, the first data center is provided with a gateway, the gateway is remotely connected to a second subnet of the second data center through a communication tunnel and is connected to a first subnet of the first data center, the first subnet and the second subnet have a same private network segment, and the method includes: The control platform obtains, from a multicast configuration interface, multicast member information for the gateway or a selection of enabling, for the gateway, a function of performing learning based on a layer 2 dynamic multicast protocol that is input by a tenant. The multicast member information indicates the gateway to configure a correspondence between a multicast group and a multicast member, and the multicast configuration interface is disposed on the control platform. The control platform configures the gateway based on the multicast member information or the selection of enabling, for the gateway, the function of performing learning based on the layer 2 dynamic multicast protocol. When the tenant inputs the multicast member information, the control platform configures the gateway to record the correspondence between a multicast group and a multicast member; or when the tenant inputs the selection of enabling, for the gateway, the function of performing learning based on the layer 2 dynamic multicast protocol, the control platform configures the gateway to enable the function of performing learning based on the layer 2 dynamic multicast protocol, and the layer 2 dynamic multicast protocol indicates the gateway to dynamically learn of the correspondence between a multicast group and a multicast member.

In some embodiments, the gateway is disposed on a side of an on-cloud data center. A tenant can operate a client to access an interaction interface or API provided by the control platform, to configure a layer 2 gateway, or input a command used to configure a multicast function of a layer 2 gateway. The control platform configures the layer 2 gateway according to the command. In some embodiments, configuration of the layer 2 gateway may be statically configured by the tenant or dynamically learned of based on a protocol such as IGMP. Specifically, in some embodiments, the tenant inputs a command igmp enable, to enable an IGMP function.

According to the foregoing solution, a multicast capability is added based on an on-cloud and on-premises layer 2 interworking capability in the hybrid cloud environment, to extend an on-cloud and on-premises communication scenario.

With reference to the first aspect, in a possible implementation, the layer 2 dynamic multicast protocol includes an internet group management protocol IGMP.

With reference to the first aspect, in a possible implementation, the correspondence between a multicast group and a multicast member indicates that the multicast member includes a first device in the first subnet, a second device in the second subnet, and a third device in the second subnet, and the method further includes the following steps: The control platform configures the gateway to receive a multicast packet sent by the first device in the first subnet; and the control platform configures the gateway to send the multicast packet to the second subnet through the communication tunnel according to a multicast routing rule.

In some embodiments, the first device in the first subnet records a multicast group private address, and the multicast packet sent by the first device includes the private address. The gateway sends the multicast packet to the second subnet of the on-premises data center through a layer 2 communication tunnel based on the correspondence between a multicast group member and a multicast group in a multicast routing rule recorded by the gateway. The layer 2 communication tunnel may be implemented based on a large layer 2 technology, for example, a virtual extensible local area network (Virtual eXtensible Local Area Network, VXLAN) or generic routing encapsulation (Generic Routing Encapsulation, GRE).

According to the foregoing solution, a multicast source located at the on-cloud data center can perform multicast communication with a multicast group member located at an on-premises data center.

With reference to the first aspect, in a possible implementation, the correspondence between a multicast group and a multicast member further indicates that the multicast member includes a fourth device and a fifth device in the first subnet, and the method further includes the following steps: The control platform configures the gateway to receive a multicast packet sent by the first device in the first subnet; and the control platform configures the gateway to send the multicast packet to the fourth device and the fifth device according to the multicast routing rule.

According to the foregoing solution, the multicast source located at the on-cloud data center can perform multicast communication with a multicast group member located at the on-cloud data center.

With reference to the first aspect, in a possible implementation, the correspondence between a multicast group and a multicast member indicates that the multicast member includes a first device in the second subnet, a second device in the first subnet, and a third device in the first subnet, and the method further includes the following steps: The control platform configures the gateway to receive a multicast packet sent by the first device in the second subnet through the communication tunnel; and the control platform configures the gateway to send the multicast packet to the second device and the third device according to the multicast routing rule.

According to the foregoing solution, a multicast source located at the on-premises data center can perform multicast communication with a multicast group member located at the on-cloud data center.

According to a second aspect, this application provides a control platform in a hybrid cloud environment, configured to configure multicast communication between a first data center and a second data center. The first data center is configured to provide a public cloud service, the second data center is configured to provide a non-public cloud service, the first data center is provided with a gateway, the gateway is remotely connected to a second subnet of the second data center through a communication tunnel and is connected to a first subnet of the first data center, the first subnet and the second subnet have a same private network segment, and the control platform includes: an obtaining module, configured to obtain, from a multicast configuration interface, multicast member information for the gateway or a selection of enabling, for the gateway, a function of performing learning based on a layer 2 dynamic multicast protocol that is input by a tenant, where the multicast member information indicates the gateway to configure a correspondence between a multicast group and a multicast member, and the multicast configuration interface is disposed on the control platform; and a configuration module, configured to configure the gateway based on the multicast member information or the selection of enabling, for the gateway, the function of performing learning based on the layer 2 dynamic multicast protocol, where when the tenant inputs the multicast member information, the control platform configures the gateway to record the correspondence between a multicast group and the multicast member; or when the tenant inputs the selection of enabling, for the gateway, the function of performing learning based on the layer 2 dynamic multicast protocol, the control platform configures the gateway to enable the function of performing learning based on the layer 2 dynamic multicast protocol, and the layer 2 dynamic multicast protocol indicates the gateway to dynamically learn of the correspondence between a multicast group and a multicast member.

The second aspect or any implementation of the second aspect is an apparatus implementation corresponding to the first aspect or any implementation of the first aspect. The descriptions in the first aspect or any implementation of the first aspect are applicable to the second aspect or any implementation of the second aspect. Details are not described herein again.

According to a third aspect, this application provides a layer 2 gateway in a hybrid cloud environment, including a functional module that can perform the multicast communication method in the hybrid cloud environment according to the first aspect and any possible implementation of the first aspect, where the multicast communication method is performed by the layer 2 gateway.

According to a fourth aspect, an embodiment of this application provides a computing device cluster, including at least one computing device. Each computing device includes a processor and a memory, and the processor of the at least one computing device is configured to execute instructions stored in the memory of the at least one computing device, so that the computing device cluster performs the method according to the first aspect or any implementation of the first aspect.

According to a fifth aspect, an embodiment of this application provides a computer program product including instructions. When the instructions are run by a computing device cluster, the computing device cluster is caused to perform any possible method according to the first aspect.

According to a sixth aspect, an embodiment of this application provides a computer-readable storage medium, including computer program instructions. When the computer program instructions are executed by a computing device cluster, the computing device cluster performs any possible method according to the first aspect.

### BRIEF DESCRIPTION OF DRAWINGS

FIG. 1 is a diagram of a data format of a virtual extensible local area network (Virtual Extensible Local Area Network, VXLAN) packet;
FIG. 2 is a diagram of a system structure of a hybrid cloud communication system;
FIG. 3 is a flowchart of a configuration method in a hybrid cloud environment;
FIG. 4 is a diagram of a system structure of a hybrid cloud environment;
FIG. 5 is a data exchange diagram of a communication method in a hybrid cloud environment;
FIG. 6 is another data exchange diagram of a communication method in a hybrid cloud environment;
FIG. 7 is a diagram of another system structure of a hybrid cloud environment;
FIG. 8a to FIG. 8c are diagrams of interaction interfaces provided by a control platform;
FIG. 9A and FIG. 9B are a diagram of a packet flow direction in which a layer 2 gateway performs a proxy reply to a physical machine;
FIG. 10A and FIG. 10B are a diagram of a packet flow direction in which a physical machine actively sends a packet to a virtual machine;
FIG. 11A and FIG. 11B are a diagram of a packet flow direction in which a virtual machine replies to a physical machine;
FIG. 12A and FIG. 12B are a diagram of a packet flow direction in which a device manager performs a proxy reply to a virtual machine;
FIG. 13 is a diagram of an apparatus structure of a layer 2 gateway in a hybrid cloud environment;
FIG. 14 is a diagram of an apparatus structure of a management apparatus in a hybrid cloud environment;
FIG. 15 is a diagram of another apparatus structure of a layer 2 gateway;
FIG. 16 is a diagram of another apparatus structure of a management apparatus in a hybrid cloud environment;
FIG. 17 is a flowchart of a multicast configuration method in a hybrid cloud environment according to an embodiment of this application;
FIG. 18 is a diagram of a structure of a multicast system in a hybrid cloud environment according to an embodiment of this application;

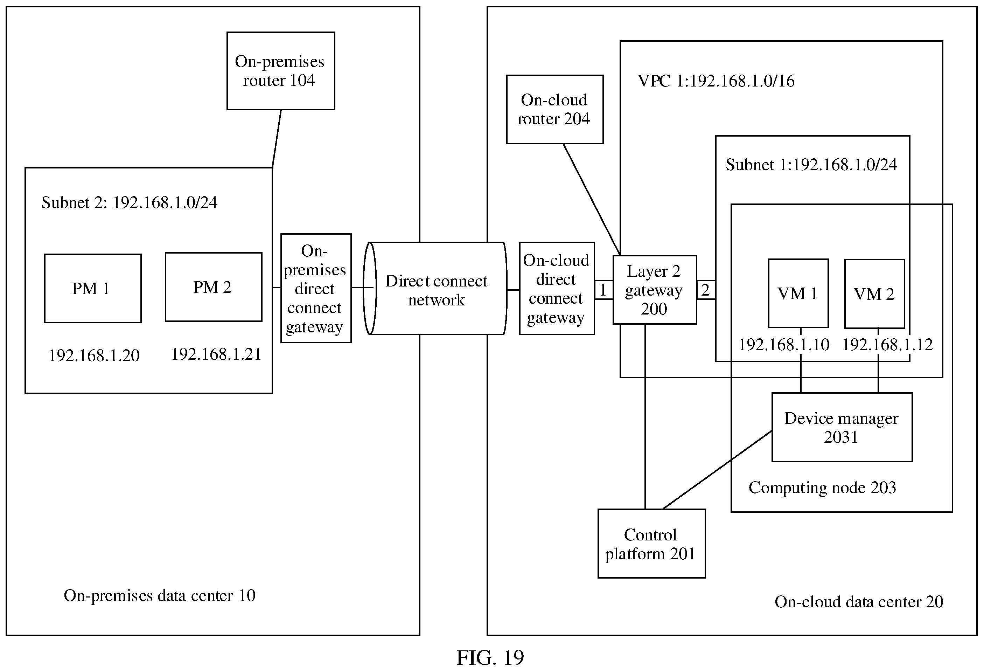

FIG. 19 is a diagram of a structure of a multicast system in another hybrid cloud environment according to an embodiment of this application;
FIG. 20 is a data exchange diagram of a multicast communication method in a hybrid cloud environment according to an embodiment of this application;
FIG. 21A to FIG. 21C are a data exchange diagram of a multicast communication method in another hybrid cloud environment according to an embodiment of this application;
FIG. 22 is a data exchange diagram of a multicast communication method in another hybrid cloud environment according to an embodiment of this application;
FIG. 23A to FIG. 23C are a data exchange diagram of a multicast communication method in another hybrid cloud environment according to an embodiment of this application;
FIG. 24 is a diagram of a structure of a layer 2 gateway 200 according to an embodiment of this application; and
FIG. 25 is a diagram of a structure of a control platform 201 according to an embodiment of this application.

### DESCRIPTION OF EMBODIMENTS

First, nouns used in embodiments of the present invention are explained as follows:

Static multicast: Before multicast communication starts, a multicast member is determined, and a pre-stored routing scheme is invoked based on a multicast member distribution.

Dynamic multicast: Joining and leaving of a group member at any time and a network status change are considered in a multicast communication process.

An internet group management protocol (Internet Group Management Protocol, IGMP) is a protocol responsible for managing an IPv4 multicast member in a TCP/IP suite. IGMP is used to establish and maintain a multicast group membership between a receiver host and a multicast router directly adjacent to the receiver host. IGMP implements a group member management function by exchanging an IGMP packet between the receiver host and the multicast router. The IGMP packet is encapsulated in an IP packet.

IGMP proxy (IGMP Proxy): The IGMP proxy creates a multicast table by intercepting an IGMP packet between a user and a router. An upstream port of the proxy device acts as a host, and a downstream port acts as a router.

IGMP snooping (IGMP Snooping): A layer 2 device running IGMP snooping analyzes a received IGMP packet, sets up a mapping relationship between a port and a multicast MAC address, and forwards multicast data based on the mapping relationship.

A public cloud service, namely, infrastructure as a service (Infrastructure as a Service, IaaS), is to provide, to an outside as a service through internet, infrastructure provided by a public cloud service provider. In such a service model, a user does not need to construct a data center, but rents infrastructure such as a server, a storage, and a network for use. The public cloud service is implemented by providing a virtual environment (for example, a virtual machine). A core attribute of a public cloud service is that a plurality of users share cloud infrastructure and the users are isolated from each other.

A non-public cloud service is infrastructure dedicated to a single user, for example, a private cloud service and an on-premises service.

A private cloud (Private Clouds) service means that a single user owns infrastructure such as a server, a storage, and a network, and can fully control the infrastructure. The private cloud service is implemented by providing a virtual environment (for example, a virtual machine). A core attribute of the private cloud service is that the single user exclusively uses the infrastructure.

An on-premises (On-premises) service means that a single user locally builds infrastructure such as a server, a storage, and a network. The user exclusively uses the built infrastructure. The on-premises service is implemented by using a physical machine (physical machine).

An on-cloud data center is a data center that provides a public cloud service.

An on-premises data center is a data center that provides a non-public cloud service. If the on-premises data center provides an on-premises service, the on-premises data center includes a plurality of physical machines (physical machine). If the on-premises data center provides a private cloud service, the on-premises data center includes a plurality of virtual machines.

Public address: An internet network information center (Internet Network Information Center, Internet NIC) is responsible for managing the public address. The public address is an IP address that may be addressed on the Internet.

A private address is an IP address that cannot be addressed on the internet but can be addressed only on a local area network. The private address is prohibited from being used on the internet.

The private address is a reserved IP address. Classification, network segments, and a quantity of private addresses are shown in the following table:

| Classification of private addresses | Network segment | Quantity of available private addresses |
|---|---|---|
| Class A private address | 10.0.0.0/8 | 16,777,212 |
| Class B private address | 172.16.0.0/12 | 1,048,572 |
| Class C private address | 192.168.0.0/16 | 65,532 |

A virtual private cloud(Virtual Private Cloud, VPC): The VPC is set on a public cloud, and the VPC is a local area network of a user of a public cloud service at an on-cloud data center.

Specifically, the VPC isolates virtual networks. Each VPC has an independent tunnel number, and one tunnel number corresponds to one virtual network. Packets between virtual machines in a VPC have a same tunnel identifier and are sent to a physical network for transmission. Tunnel identifiers of virtual machines in different VPCs are different, and the virtual machines are located on two different routing planes. Therefore, the virtual machines in the different VPCs cannot communicate with each other, naturally implementing logical isolation.

The tunnel identifier may be, for example, a virtual local area network identifier (Virtual Local Area Network Identification, VLAN ID) or a virtual network identifier (Virtual Network ID, VNI).

A media access control (Media Access Control Address, MAC) address is an address used to determine a location of a network device. In an open system interconnection (Open System Interconnection, OSI) seven layer model, a layer 3 network layer is responsible for an IP address, and a layer 2 data link layer is responsible for a MAC address. The MAC address is used to uniquely identify a network interface card on a network. If a device has one or more network interface cards, each network interface card requires and has a unique MAC address.

Data frame (Data frame): The data frame is a protocol data unit at a layer 2 data link layer of an OSI seven layer model. The data frame includes an Ethernet header and a data part. The Ethernet header includes some necessary control information, for example, address information (a source MAC address and a destination MAC address), and the data part includes data transmitted from a network layer, for example, an IP packet. Specifically, both an IP header and a data part of the IP packet are set in the data part of the data frame.

A layer 2 packet is a data frame whose data part carries an IP packet. A quadruplet of the layer 2 packet includes a source IP address, a destination IP address, a source MAC address, and a destination MAC address. The source MAC address and the destination MAC address are set in an Ethernet header of the data frame, and the source IP address and the destination IP address are set in an IP packet header of the IP packet.

Address resolution protocol (Address Resolution Protocol, ARP): It is specified in an Ethernet protocol that if a host needs to directly communicate with another host on a same local area network, the host needs to learn of a MAC address of a destination host. However, in a TCP/IP protocol, a network layer and a transport layer only concern about an IP address of the destination host. Consequently, when the IP protocol is used in the Ethernet, data that is provided by an upper-layer IP protocol and that is received by an Ethernet protocol of the data link layer includes only the IP address of the destination host. Therefore, the MAC address of the destination host needs to be obtained based on the IP address of the destination host in a method. This is a thing that needs to be done by the ARP protocol. Address resolution (address resolution) is a process in which a host translates a destination IP address into a destination MAC address. The host broadcasts an ARP request packet including the destination IP address to all hosts on the local area network, and receives an ARP reply packet returned by the destination host corresponding to the destination IP address on the local area network. The ARP reply packet carries the MAC address of the destination host, so that the host determines the MAC address of the destination host. In addition, after receiving the ARP reply packet, the host stores and retains the IP address and the MAC address in a local ARP entry for a period of time. When making a next request, the host directly queries the ARP entry to save resources. The ARP is an important communication protocol in the local area network.

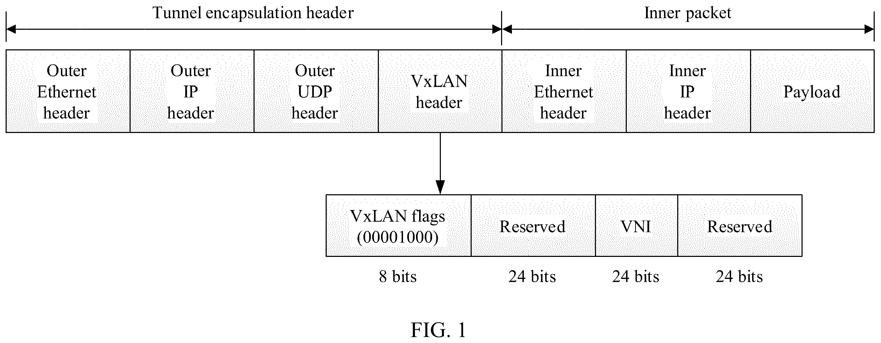

A VXLAN is an overlay network technology. For details, refer to FIG. 1. FIG. 1 is a diagram of a data format of a VXLAN packet. In the VXLAN packet, an inner packet is encapsulated into a data part (payload) of a user datagram protocol (User Datagram Protocol, UDP) packet. The data part of the UDP packet carries a VXLAN header, an inner Ethernet header (Inner Ethernet Header), an inner IP header (Inner IP Header), and a data part (Payload) of an IP packet that are shown in FIG. 1. The inner packet of the VXLAN packet includes the inner Ethernet header, the inner IP header, and the data part of the IP packet. The inner Ethernet header records a source MAC address of the inner packet and a destination MAC address of the inner packet, and the inner IP header records a source IP address and a destination IP address of the inner packet.

The VXLAN packet further includes a tunnel encapsulation header. The tunnel encapsulation header includes an outer Ethernet header (Outer Ethernet Header), an outer IP header (Outer IP Header), an outer UDP header (Outer UDP Header), and the VXLAN header. The VXLAN header includes a VXLAN flags field (8 bits), a reserved field (24 bits), VNI (14 bits), and a reserved field (24 bits).

The outer Ethernet header records a source MAC address and a destination MAC address of a VXLAN tunnel end point (VXLAN Tunnel End Point, VTEP). The outer IP header records a source IP address and a destination IP address of the VXLAN tunnel end point.

The VXLAN tunnel end point is referred to as a VTEP device below. The VTEP device is an end point of a VXLAN tunnel, and is configured to encapsulate the inner packet, that is, to add the outer Ethernet header, the outer IP header, an outer user datagram protocol header, and the VXLAN header to the inner packet, to generate the VXLAN packet. The VTEP device may further decapsulate the VXLAN packet, that is, to remove the outer Ethernet header, the outer IP header, the outer user datagram protocol header, and the VXLAN header from the VXLAN packet, to obtain the inner packet. In addition, in a decapsulation process, the VTEP device obtains the VNI from the VXLAN header. The VNI is used to identify a specific VPC to which the inner packet belongs.

In a VXLAN encapsulation process, the VTEP device uses a layer 2 packet as the inner packet of the VXLAN packet; records, in the outer Ethernet header of the tunnel encapsulation header of the VXLAN packet, a source MAC address as a MAC address of the VTEP device, and a destination MAC address as a MAC address of a next-hop device; records, in the outer IP header of the tunnel encapsulation header of the VXLAN packet, a source IP address as the IP address of the VTEP device, and a destination IP address as an IP address of a peer VTEP device; and records a VNI in the VNI field of the VXLAN header of the VXLAN packet. The next-hop device is a network device connected to the VTEP device, and the network device is a next-hop device in a routing path of the VXLAN packet from the VTEP device to the peer VTEP device of a tunnel based on the destination IP address recorded in the outer IP header.

The IP address of the VTEP device is referred to as a VTEP IP in embodiments of the present invention, and the MAC address of the VTEP device is referred to as VTEP MAC in embodiments of the present invention.

A layer 2 communication tunnel is a communication tunnel established based on an overlay network technology. A layer 2 packet is transmitted through the layer 2 communication tunnel as an inner packet of a VXLAN packet. In a transmission process, a source MAC address and a destination MAC address of the layer 2 packet remain unchanged.

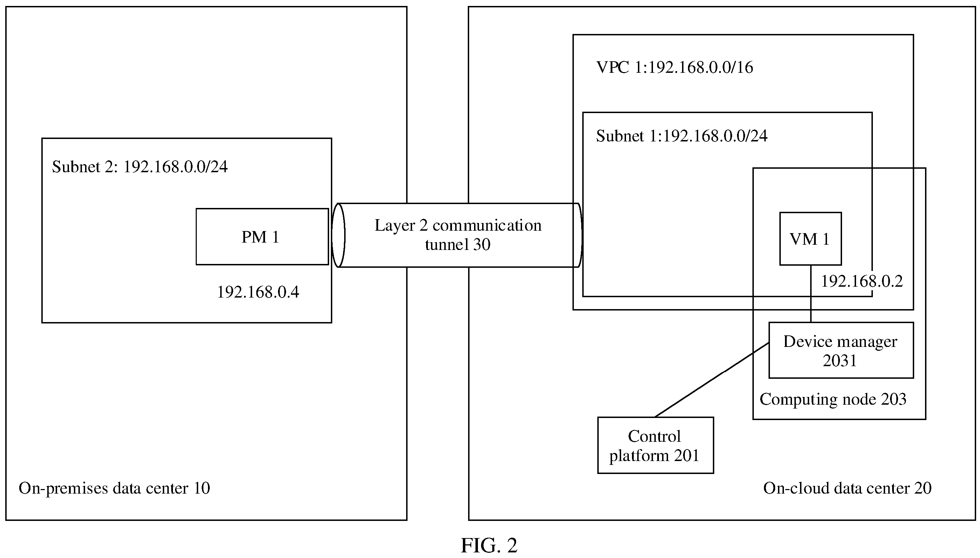

FIG. 2 is a diagram of a system structure of a hybrid cloud communication system. As shown in FIG. 2, the hybrid cloud communication system includes an on-premises data center 10 and an on-cloud data center 20. The on-premises data center 10 and the on-cloud data center 20 are separately connected to the internet (not shown in the figure). The on-premises data center 10 and the on-cloud data center 20 are located at different geographical locations.

The on-cloud data center 20 is configured to provide a public cloud service. A virtual machine of the on-cloud data center 20 is maintained by a public cloud service provider, and a user purchases and uses the public cloud service provided by the on-cloud data center 20.

A control platform 201 of the on-cloud data center 20 provides a user interaction interface, for example, a configuration page or an application programming interface (Application Programming Interface, API). The user enters configuration information in the user interaction interface of the control platform 201. The control platform 201 creates a VPC 1 dedicated to the user at the on-cloud data center 20 based on the configuration information, sets a subnet 1 (192.168.0.0/24) in the VPC 1, and creates a virtual machine VM 1 in the subnet 1. The VM 1 runs on a computing node 203 of the on-cloud data center 20.

A private address of the VM 1 is 192.168.0.2, and the private address belongs to a private address segment of the subnet 1.

Specifically, the control platform 201 is connected to a device manager 2031 of the computing node 203. The control platform 201 may control, based on the configuration information, the device manager 2031 to create the VM 1 on the computing node 203, and set the private address of the VM 1 to 192.168.0.2.

The control platform 201 is configured to manage all devices at the cloud data center 20, for example, may assign and record private addresses and MAC addresses of all virtual machines in a VPC, record a VTEP IP and VTEP MAC of a VTEP device, and perform full life cycle management on the virtual machines in the VPC (for example, creation, deletion, restarting, specification modification, network configuration modification, and storage configuration modification).

The control platform 201 is, for example, a software defined network (Software Defined Network, SDN) controller. The device manager 2031 is, for example, a virtual machine monitor (Virtual Machine Monitor, VMM) or a virtual machine manager hypervisor.

In this embodiment, the on-premises data center 10 provides an on-premises service, and the on-premises data center 10 includes a physical machine PM 1 disposed in a subnet 2 (192.168.0.0/24). A private address of the PM 1 is 192.168.0.4, the subnet 1 and the subnet 2 have a same private address segment, and the private address 192.168.0.4 of the PM 1 is different from the private address 192.168.0.2 of the VM 1.

For example, the on-premises data center 10 may be a server cluster that is set up in an equipment room that is purchased or rented by the user, or may be a home communication system that is implemented by the user in a home environment by using a router and a personal computer.

Therefore, the user has management permission on all the devices at the on-premises data center 10, and the user has management permission only on the VPC 1 at the on-cloud data center 20.

The management permission of the user on the VPC 1 is obtained by paying the public cloud service provider.

The subnet 1 and the subnet 2 of the user belong to the same private address segment 192.168.0.0./24, but the PM 1 and the VM 1 have different private addresses. The user expects that the subnet 1 of the on-cloud data center 20 and the subnet 2 of the on-premises data center 10 may interwork with each other, and that the PM 1 and the VM 1 are disposed in a same subnet. To achieve this purpose, a layer 2 communication tunnel 30 may be disposed between the subnet 1 and the subnet 2.

The on-premises data center 10 and the on-cloud data center 20 implement a remote connection through the layer 2 communication tunnel 30. The layer 2 communication tunnel 30 may be specifically implemented by using a remote connection gateway and a layer 2 tunnel gateway. The remote connection gateway is, for example, a virtual private network (Virtual Private Network, VPN) gateway or a direct connect gateway. The layer 2 tunnel gateway may be implemented based on a large layer 2 technology, for example, virtual extensible local area network (Virtual eXtensible Local Area Network, VXLAN) or generic routing encapsulation (Generic Routing Encapsulation, GRE). A source MAC address and a destination MAC address of a layer 2 packet may remain unchanged in a process in which the layer 2 packet is transmitted through the layer 2 communication tunnel 30. A specific principle thereof is described in detail in the following embodiments.

In this embodiment of the present invention, when the PM 1 needs to communicate with the VM 1 for a first time, the PM 1 records the private address 192.168.0.2 of the VM 1, but the PM 1 does not record a MAC address of the VM 1. Therefore, the PM 1 needs to broadcast an ARP request packet in the subnet 2. A source MAC address of the ARP request packet is a MAC address of the PM 1, a source IP address is the private address of the PM 1, a destination MAC address is FFFF FFFF FFFF (which is a broadcast address), and a destination IP address is the private address of the VM 1. The ARP request packet is used to request the MAC address corresponding to the private address 192.168.0.2 of the VM 1. The ARP request packet is broadcast in the subnet 2, is sent to the subnet 1 through the layer 2 communication tunnel 30, and is broadcast in the subnet 1.

However, in consideration of security, the control platform 201 prohibits an ARP request packet from the on-premises data center 10 from being broadcast in the subnet 1, the VM 1 cannot receive the ARP request packet, and the PM 1 cannot obtain an ARP reply packet sent by the VM 1. Consequently, the PM 1 cannot obtain the MAC address of the VM 1. Even if the subnet 1 and the subnet 2 are connected through the layer 2 communication tunnel 30, the PM 1 and the VM 1 are still layer 2 isolated.

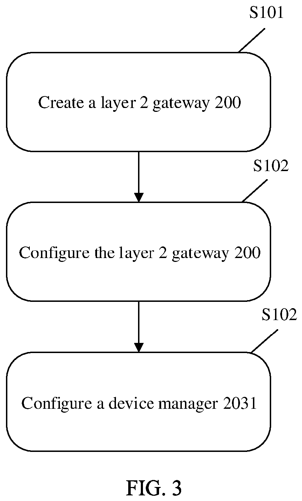

In view of the foregoing technical problem, an embodiment of the present invention provides a management method in a hybrid cloud environment. FIG. 3 is a flowchart of a management method in a hybrid cloud environment according to an embodiment of the present invention. The method includes the following steps.

Step S101: Create a layer 2 gateway 200.

In this step, a control platform 201 creates the layer 2 gateway 200 in a subnet 1 based on configuration information, and the layer 2 gateway 200 includes a network interface card 1 and a network interface card 2. The network interface card 1 is provided with a MAC address 1 of the layer 2 gateway 200, and the network interface card 2 is provided with a MAC address 2 of the layer 2 gateway 200.

Step S102: Configure the layer 2 gateway 200.

In this step, the control platform 201 configures the network interface card 1 to access a layer 2 communication tunnel 30, so that the network interface card 1 is connected to a subnet 2, and configures the network interface card 2 to be connected to the subnet 1.

In addition, the control platform 201 configures the layer 2 gateway 200 to intercept an ARP request packet that is from a PM 1 in the subnet 2 and that is for a VM 1 in the subnet 1, and configures the layer 2 gateway 200 to return an ARP reply packet to the PM 1. The ARP reply packet carries the MAC address 1 of the network interface card 1 that is of the layer 2 gateway 200 and that is connected to the subnet 2.

In addition, the control platform 201 may further configure the layer 2 gateway 200 to perform MAC address translation on a layer 2 packet received from the network interface card 1. Specifically, when determining that a destination IP address of the layer 2 packet is an IP address of the VM 1, the layer 2 gateway 200 obtains a MAC address of the VM 1 based on the IP address of the VM 1, modifies a destination MAC address of the layer 2 packet from the MAC address 1 to the MAC address of the VM 1, modifies a source MAC address from a MAC address of the PM 1 to the MAC address 2, and sends a translated packet to the subnet 1 by using the network interface card 2.

Further, the control platform 201 may configure the layer 2 gateway 200 to perform MAC address translation on the layer 2 packet received from the network interface card 2. Specifically, when determining that the destination IP address of the layer 2 packet is an IP address of the PM 1, the layer 2 gateway 200 obtains the MAC address of the PM 1 based on the IP address of the PM 1, modifies the destination MAC address of the layer 2 packet from the MAC address 2 to the MAC address of the PM 1, modifies the source MAC address from the MAC address of the VM 1 to the MAC address 1, and sends a translated packet to the subnet 1 by using the network interface card 2.

Step S103: Configure a device manager 2031.

The control platform 201 configures the device manager 2031 to intercept an ARP request packet that is from the VM 1 and that is for the PM 1 in the subnet 2, and configures the device manager 2031 to return an ARP reply packet to the VM 1. The ARP reply packet carries the MAC address 2 of the network interface card 2 that is of the layer 2 gateway 200 and that is connected to the subnet 1.

Optionally, in another embodiment, the control platform 201 may further configure the layer 2 gateway 200 in the step S102 to intercept the ARP request packet that is from the VM 1 and that is for the PM 1 in the subnet 2, and configures the layer 2 gateway 200 to return an ARP reply packet to the VM 1. The ARP reply packet carries the MAC address 2 of the network interface card 2 that is of the layer 2 gateway 200 and that is connected to the subnet 1. In this embodiment, the layer 2 gateway 200 is used to intercept the ARP request packet sent by the VM 1, so that the device manager 2031 does not need to be configured to intercept the ARP request packet sent by the VM 1. Therefore, the step S103 may be omitted in this embodiment.

Because the device manager 2031 and the VM 1 are disposed on a same computing node 203, the device manager 2031 is configured to intercept the ARP request packet sent by the VM 1, so that the ARP request packet may be limited inside the computing node 203, to reduce network load of an on-cloud data center 20.

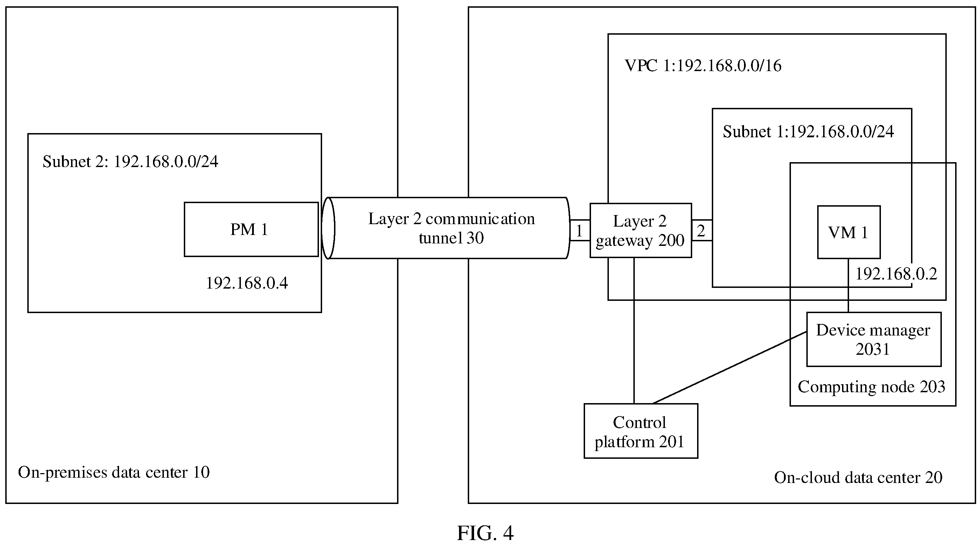

After the foregoing configuration, the hybrid cloud environment may be updated as shown in FIG. 4. FIG. 4 is a diagram of a system structure of a hybrid cloud environment according to an embodiment of the present invention. As shown in the figure, compared with the previous embodiment, in this embodiment, the layer 2 gateway 200 is further configured. The network interface card 1 of the layer 2 gateway 200 is connected to the layer 2 communication tunnel 30, so that the network interface card 1 is connected to the subnet 2, and the network interface card 2 is connected to the subnet 1.

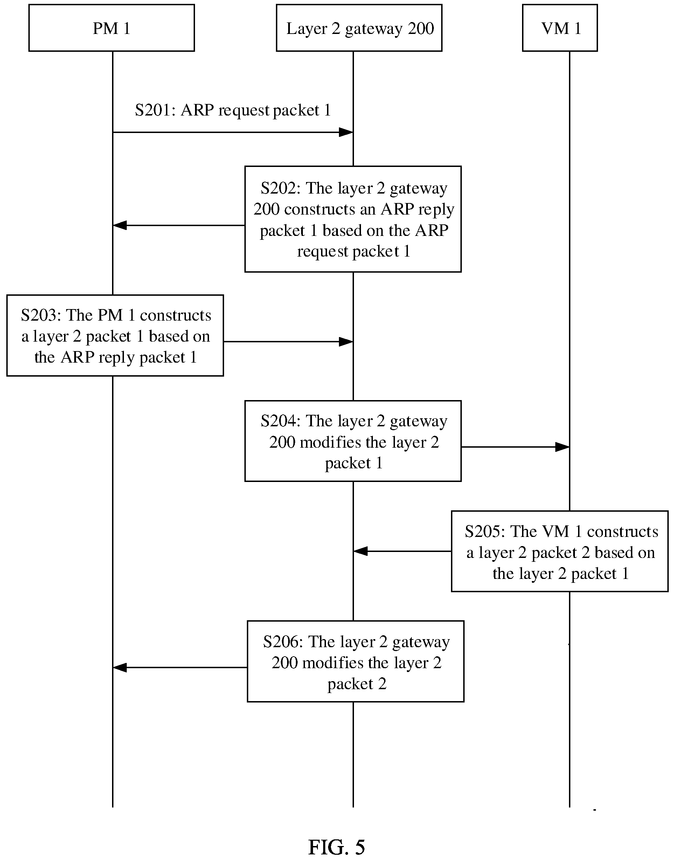

With reference to FIG. 5, the following describes a communication process between the subnet 1 and the subnet 2 based on the hybrid cloud environment shown in FIG. 4.

FIG. 5 is a data exchange diagram of a communication method in a hybrid cloud environment according to an embodiment of the present invention. In this embodiment, a PM 1 actively communicates with a VM 1. Because a network layer and a transport layer only concern about an IP address of a destination host in a TCP/IP protocol, when the PM 1 communicates with the VM 1 for a first time, the PM 1 records a private address 192.168.0.2 of the VM 1, but a local ARP entry of the PM 1 does not record a MAC address corresponding to the private address 192.168.0.2 of the VM 1.

However, for ease of description, in the following, a MAC address of the PM 1 is recorded as PM 1 MAC, a MAC address of the VM 1 is recorded as VM 1 MAC, a MAC address 1 of a layer 2 gateway 200 is recorded as L2 MAC 1, and a MAC address 2 of the layer 2 gateway 200 is recorded as L2 MAC 2.

Specifically, a hybrid cloud communication method in this embodiment of the present invention includes the following steps.

Step S201: The PM 1 broadcasts an ARP request packet 1 in a subnet 2, where the ARP request packet 1 is sent to the layer 2 gateway 200 through a layer 2 communication tunnel.

In this step, the PM 1 actively communicates with the VM 1. In this case, the PM 1 records the private address 192.168.0.2 of the VM 1, but does not record the MAC address corresponding to the private address of the VM 1. Before the PM 1 and the VM 1 perform layer 2 communication, the PM 1 needs to obtain the MAC address corresponding to the private address of the VM 1. Therefore, the PM 1 broadcasts the ARP request packet 1 in the subnet 2. A source IP address of the ARP request packet 1 is a private address 192.168.0.4 of the PM 1, a source MAC address is PM 1 MAC, a destination IP address is the private address 192.168.0.2 of the VM 1, and a destination MAC address is FFFF FFFF FFFF. The ARP request packet 1 is used to request the MAC address of the VM 1.

Specifically, the ARP request packet 1 is sent to a network interface card 1 of the layer 2 gateway 200 through a layer 2 communication tunnel 30.

It should be noted that the ARP request packet 1 arrives at the network interface card 1 of the layer 2 gateway 200 through the layer 2 communication tunnel 30. In this process, the source MAC address, the destination MAC address, the source IP address, and the destination IP address of the ARP request packet 1 remain unchanged. A specific principle is described in detail below.

Step S202: The layer 2 gateway 200 constructs an ARP reply packet 1 based on the ARP request packet 1, and sends the ARP reply packet 1 to the PM 1.

The layer 2 gateway 200 obtains the ARP request packet 1 from the network interface card 1, and determines, based on the destination MAC address (FFFF FFFF FFFF) of the ARP request packet 1, that the ARP request packet 1 is a broadcast packet. The layer 2 gateway 200 intercepts the ARP request packet 1, and constructs the ARP reply packet 1.

A source IP address of the ARP reply packet 1 is the private address 192.168.0.2 of the VM 1, a source MAC address is L2 MAC 1, a destination IP address is the private address 192.168.0.4 of the PM 1, and a destination MAC address is PM 1 MAC. The ARP reply packet 2 is used to notify the PM 1 that the MAC address corresponding to 192.168.0.2 is L2 MAC 1.

The layer 2 gateway 200 sends the ARP reply packet 1 to the layer 2 communication tunnel 30 by using the network interface card 1, and the ARP reply packet 1 is transmitted to the PM 1 in the subnet 2 through the layer 2 communication tunnel 30.

In addition, in this step, the layer 2 gateway 200 learns of and records a correspondence between the source MAC address (the PM 1 MAC) and the source IP address (192.168.0.4) of the ARP request packet 1.

For example, the layer 2 gateway 200 may record the correspondence between PM 1 MAC and 192.168.0.4 in a local ARP entry of the layer 2 gateway 200.

Step S203: The PM 1 constructs a layer 2 packet 1 based on the ARP reply packet 1, and sends the layer 2 packet 1 to the layer 2 gateway 200.

Specifically, the PM 1 constructs the layer 2 packet 1 based on the ARP reply packet 1, and sends the layer 2 packet 1 to the network interface card 1 of the layer 2 gateway 200 through the layer 2 communication tunnel 30.

The PM 1 learns of L2 MAC 1 from the source MAC address of the ARP reply packet 1. The PM 1 constructs the layer 2 packet 1 based on learned L2 MAC 1. A source IP address of the layer 2 packet 1 is the private address 192.168.0.4 of the PM 1, a source MAC address is PM 1 MAC, a destination IP address is the private address 192.168.0.2 of the VM 1, and a destination MAC address is L2 MAC 1 (namely, a MAC address of the network interface card 1). Specifically, a data part of the layer 2 packet 1 carries an IP packet 1, and a data part of the IP packet 1 carries request information 1. The request information 1 is used to request a reply from the VM 1. An IP header of the IP packet 1 carries a destination IP address and a source IP address.

In this step, the PM 1 may record a correspondence between 192.168.0.2 and L2 MAC 1 in the local ARP entry. Subsequently, when the PM 1 communicates with 192.168.0.2, the PM 1 simply needs to determine L2 MAC 1 by querying the local ARP entry, and does not need to send an ARP request packet again to perform MAC address learning.

Step S204: The layer 2 gateway 200 modifies the layer 2 packet 1, and sends a modified layer 2 packet 1 to the VM 1.

In this step, the layer 2 gateway 200 determines the MAC address (VM 1 MAC) of the VM 1 based on the destination IP address 192.168.0.2 of the layer 2 packet 1, modifies the destination MAC address of the layer 2 packet 1 from L2 MAC 1 to VM 1 MAC, and modifies the source MAC address from PM 1 MAC to L2 MAC 2.

It should be noted that the control platform 201 may send the correspondence between 192.168.0.2 and VM 1 MAC to the layer 2 gateway 200 in advance, and the layer 2 gateway 200 records the correspondence between 192.168.0.2 and VM 1 MAC in the local ARP entry.

For example, when creating the layer 2 gateway 200, the control platform 201 may preset the correspondence between 192.168.0.2 and VM 1 MAC in the layer 2 gateway 200.

Specifically, the layer 2 gateway 200 sends the modified layer 2 packet 1 to the VM 1 in the subnet 1 by using the network interface card 2 connected to the subnet 1.

Step S205: The VM 1 constructs a layer 2 packet 2 based on the layer 2 packet 1, and sends the layer 2 packet 2 obtained through modification to the layer 2 gateway 200.

In this step, the layer 2 packet 2 is a reply packet of the layer 2 packet 1.

Specifically, as described above, the data part of the layer 2 packet 1 carries the IP packet 1, and the data part of the IP packet 1 carries the request information 1. The VM 1 generates reply information 1 based on the request information 1, and constructs the layer 2 packet 2. A data part of the layer 2 packet 2 carries an IP packet 2, and a data part of the IP packet 2 carries the reply information 1. A source MAC address of the layer 2 packet 2 is VM 1 MAC, a destination MAC address is L2 MAC 2, a source IP address is the private address 192.168.0.2 of the VM 1, and a destination IP address is the private address 192.168.0.4 of the PM 1. The VM 1 sends the layer 2 packet 2 obtained through modification to the network interface card 2 of the layer 2 gateway 200.

Further, after receiving the layer 2 packet 1, the VM 1 may record a correspondence between the source IP address (192.168.0.4) of the layer 2 packet 1 and the source MAC address (the L2 MAC 2) of the layer 2 packet in a local ARP entry.

Subsequently, when the VM 1 communicates with 192.168.0.4, the VM 1 simply needs to determine L2 MAC 2 by querying the local ARP entry, and does not need to send an ARP request packet to perform MAC address learning.

Step S206: The layer 2 gateway 200 modifies the layer 2 packet 2, and sends a modified layer 2 packet 2 to the PM 1.

In this step, the layer 2 gateway 200 queries the local ARP entry based on the destination IP address (192.168.0.4) of the layer 2 packet 2, to determine PM 1 MAC, modify the destination MAC address of the layer 2 packet 2 to PM 1 MAC, and modify the source MAC address to L2 MAC 1.

In step S202, the layer 2 gateway 200 has learned of and recorded the correspondence between 192.168.0.4 and PM 1 MAC, and the correspondence is recorded in the local ARP entry of the layer 2 gateway 200.

After modifying the layer 2 packet 2, the layer 2 gateway 200 sends the layer 2 packet 2 to the PM 1 by using the network interface card 1.

Specifically, because the network interface card 1 is connected to the layer 2 communication tunnel 30, the layer 2 packet 2 is sent from the network interface card 1, and arrives at the PM 1 in the subnet 2 through the layer 2 communication tunnel 30.

In this way, the PM 1 receives the layer 2 packet 2, and obtains the reply information 1 of the VM 1 from the layer 2 packet 2. Communication between the PM 1 and the VM 1 is completed.

Subsequently, when the PM 1 communicates with the VM 1 again, the PM 1 does not need to send an ARP request packet, and the PM 1 simply needs to construct, based on the local ARP entry, a layer 2 packet whose destination IP address is 192.168.0.2 and whose destination MAC address is L2 MAC 1. The layer 2 packet arrives at the VM 1 through the layer 2 communication tunnel 30 and the layer 2 gateway 200.

When the VM 1 replies, the layer 2 packet whose destination IP address is 192.168.0.2 and whose destination MAC address is L2 MAC 1 is constructed, and the layer 2 packet may arrive at the PM 1 through the layer 2 gateway 200 and the layer 2 communication tunnel 30.

It should be noted that, for brevity, a device manager 2031 is omitted in FIG. 5. In step S204, the modified layer 2 packet 1 is forwarded to the VM 1 by using the device manager 2031. In addition, the layer 2 packet 2 in step S205 is forwarded to the layer 2 gateway 200 by using the device manager 2031.

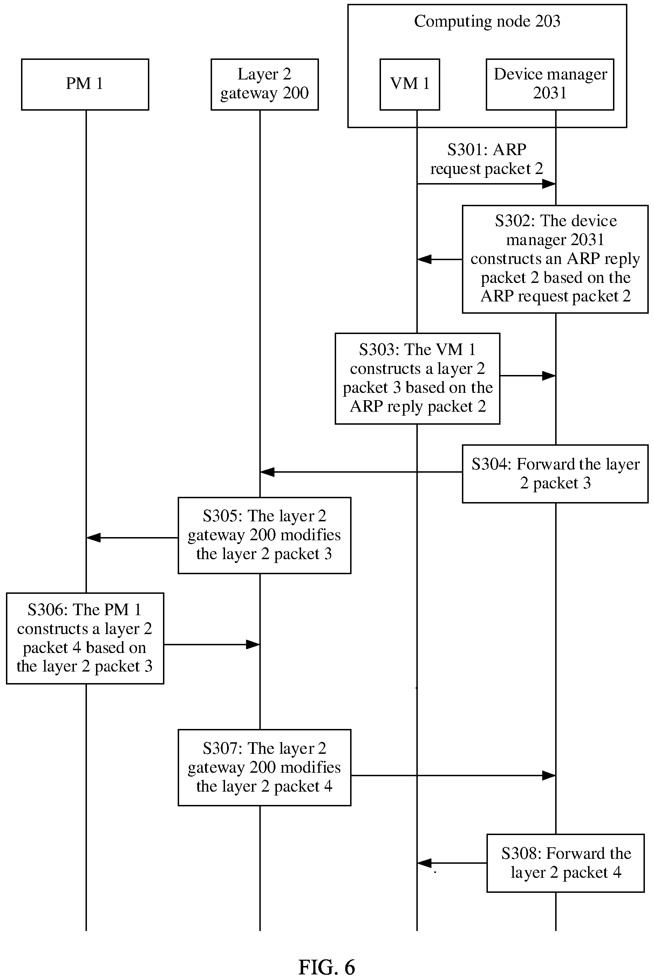

FIG. 6 is another data exchange diagram of a communication method in a hybrid cloud environment according to an embodiment of the present invention. Different from FIG. 5, in the embodiment shown in FIG. 6, a VM 1 communicates with a PM 1 for a first time, a local ARP entry of the VM 1 does not record a MAC address corresponding to a private address (192.168.0.4) of the PM 1, and the VM 1 needs to send an ARP request packet to obtain the MAC address corresponding to 192.168.0.4.

As shown in FIG. 5, a hybrid cloud communication method according to this embodiment of the present invention specifically includes the following steps.

Step 301: The VM 1 sends an ARP request packet 2 to a device manager 2031.

Because the VM 1 actively communicates with the PM 1, and the local ARP entry of the VM 1 does not record the MAC address corresponding to the private address (192.168.0.4) of the PM 1, before the VM 1 actively sends a layer 2 packet to the PM 1, the VM 1 needs to obtain the MAC address corresponding to 192.168.0.4.

Therefore, the VM 1 needs to broadcast the ARP request packet 2 in a subnet 1. A source IP address of the ARP request packet 2 is 192.168.0.2, a source MAC address is a VM 1 MAC, a destination IP address is 192.168.0.2, and a destination MAC address is FFFF FFFF FFFF. The ARP request packet 2 is used to request a MAC address corresponding to 192.168.0.2.

As shown in FIG. 4, both the VM 1 and the device manager 2031 are disposed on a computing node 203, the device manager 2031 is configured to manage the VM 1, and the ARP request packet 2 sent by the VM 1 to the subnet 1 for broadcasting first arrives at the device manager 2031.

Step 302: The device manager 2031 constructs an ARP reply packet 2 based on the ARP request packet 2, and sends the ARP reply packet 2 to the VM 1.

The device manager 2031 first determines, based on the destination MAC address (FFFF FFFF FFFF) of the ARP request packet 2, that the ARP request packet 2 is a broadcast packet, and determines, based on the destination IP address (the private address 192.168.0.4 of the PM 1) of the ARP request packet 2, that the ARP request packet 2 is not for a device in the subnet 1. In this case, the device manager 2031 needs to intercept the ARP request packet 2, and therefore, constructs the ARP reply packet 2.

Specifically, the control platform 201 sends private addresses of all virtual machines in the subnet 1 to the device manager 2031 in advance. In this embodiment, only the VM 1 is disposed in the subnet 1, and a private address of the VM 1 is 192.168.0.2.

The device manager 2031 receives and records the private address of the VM 1 in the subnet 1, and after receiving the ARP request packet 2 sent by the VM 1, determines whether the destination IP address (192.168.0.4) of the ARP request packet 2 is a recorded private address of a virtual machine in the subnet 1, and if the destination IP address (192.168.0.4) of the ARP request packet 2 is a recorded private address of a virtual machine in the subnet 1, it indicates that the ARP request packet 2 is for a virtual machine in the subnet 1, and the device manager 2031 sends the ARP request packet 2 to the subnet 1 for broadcasting; or if the destination IP address (192.168.0.4) of the ARP request packet 2 is not a recorded private address of a virtual machine in the subnet 1, it indicates that the ARP request packet 2 is not for a device (namely, a physical machine in a subnet 2) in the subnet 1. The device manager 2031 intercepts the ARP request packet 2, and constructs an ARP reply packet 2. A source MAC address of the ARP reply packet 2 is L2 MAC 2, a source IP address is the private address 192.168.0.4 of the PM 1, a destination MAC address is VM 1 MAC, and a destination IP address is a private address 192.168.0.2 of the VM 1.

The control platform 201 may send L2 MAC 2 to the device manager 2031 in advance, and the device manager 2031 receives and records L2 MAC 2.

In this embodiment, the device manager 2031 determines that the destination IP address (192.168.0.4) of the ARP request packet 2 is not a private address (192.168.0.2) of a virtual machine in the subnet 1. Therefore, the device manager 2031 constructs the ARP reply packet 2, and sends the ARP reply packet 2 to the VM 1.

The ARP reply packet 2 is used to notify the VM 1 that the MAC address corresponding to 192.168.0.4 is L2 MAC 2.

Step 303: The VM 1 constructs a layer 2 packet 3 based on the ARP reply packet 2, and sends the layer 2 packet 3 to the device manager 2031.

After receiving the ARP reply packet 2, the VM 1 learns of L2 MAC 2 based on the source MAC address of the ARP reply packet 2, and the VM 1 constructs the layer 2 packet 3 based on L2 MAC 2. A data part of the layer 2 packet 3 carries an IP packet 3. A data part of the IP packet 3 carries request information 2, and the request information 2 is used to request a reply from the PM 1. A source MAC address of the layer 2 packet 3 is VM 1 MAC, a source IP address is 192.168.0.2, a destination IP address is 192.168.0.4, and a destination MAC address is L2 MAC 2.

The VM 1 sends the layer 2 packet 3 to a network interface card 2 of the layer 2 gateway 200.

Step S304: The device manager 2031 forwards the layer 2 packet 3 to the layer 2 gateway 200 based on the destination MAC address of the layer 2 packet 3.

Specifically, the device manager 2031 forwards the layer 2 packet 3 to the network interface card 2 of the layer 2 gateway 200.

Step 305: The layer 2 gateway 200 modifies the layer 2 packet 3, and sends a modified layer 2 packet 3 to the PM 1.

Specifically, the network interface card 2 of the layer 2 gateway 200 receives the layer 2 packet 3, and determines, based on the destination IP address (192.168.0.4) of the layer 2 packet 3, whether a local ARP entry records the MAC address corresponding to 192.168.0.4. When the PM 1 once sends an ARP request packet to the layer 2 gateway 200 (referring to step 202), the local ARP entry of the layer 2 gateway 200 records a correspondence between 192.168.0.4 and PM1 MAC.

The layer 2 gateway 200 may obtain PM 1 MAC from the local ARP entry based on 192.168.0.4.

When the PM 1 has not sent any ARP request packet to the layer 2 gateway 200, the local ARP entry of the layer 2 gateway 200 does not record the MAC address corresponding to 192.168.0.4. In this case, the layer 2 gateway 200 may actively send an ARP request packet to the subnet 2 by using the network interface card 1 connected to the subnet 2, to learn of the MAC address of the PM 1.

A source MAC address of the ARP request packet is L2 MAC 1, a source IP address is 192.168.0.2, a destination IP address is 192.168.0.4, and a destination MAC address is FFFF FFFF FFFF. The ARP request packet is used to request the MAC address corresponding to 192.168.0.4 in the subnet 2, and the ARP request packet is broadcast in the subnet 2 through a layer 2 communication tunnel 30.

The PM 1 receives the ARP request packet, and constructs an ARP reply packet based on the destination IP address (192.168.0.4) of the ARP request packet. A source MAC address of the ARP reply packet is PM 1 MAC, a destination MAC address is L2 MAC 1, a source IP address is 192.168.0.4 of the PM 1, and a destination IP address is 192.168.0.2.

The PM 1 sends the ARP reply packet to the network interface card 1 of the layer 2 gateway 200 through the layer 2 communication tunnel 30. The layer 2 gateway 200 learns of PM 1 MAC from the source MAC address of the ARP reply packet, and records the correspondence between PM 1 MAC and 192.168.0.4 in the local ARP entry.

After obtaining PM 1 MAC, the layer 2 gateway 200 modifies the destination MAC address of the layer 2 packet 3 from L2 MAC 2 to PM 1 MAC, and modifies the source MAC address from VM 1 MAC to L2 MAC 1. The layer 2 gateway 200 sends the layer 2 packet 3 to the layer 2 communication tunnel 30 by using the network interface card 1, and the layer 2 packet 3 is sent to the PM 1 in the subnet 2 through the layer 2 communication tunnel 30.

In conclusion, when the local ARP entry records L2 MAC 1, the layer 2 gateway 200 directly modifies the layer 2 packet 2 based on L2 MAC 1; and when the local ARP entry does not record the L2 MAC 1, the layer 2 gateway 200 may actively send the ARP request packet to the subnet 2 to learn of L2 MAC 1.

Step 306: The PM 1 constructs a layer 2 packet 4 based on the layer 2 packet 3, and sends the layer 2 packet 4 to the layer 2 gateway 200.

After receiving the layer 2 packet 3, the PM 1 obtains the IP packet 3 from the data part of the layer 2 packet 3, and obtains the request information 2 from the data part of the IP packet 3. The PM 1 generates reply information 2 based on the request information 2, and constructs the layer 2 packet 4. A data part of the layer 2 packet 4 carries an IP packet 4, and a data part of the IP packet 4 carries the reply information 2. A source MAC address of the layer 2 packet 4 is PM 1 MAC, a destination MAC address is L2 MAC 1, a source IP address is 192.168.0.4, and a destination IP address is 192.168.0.2.

In addition, the PM 1 may record the source MAC address (L2 MAC 1) and the source IP address (192.168.0.2) of the layer 2 packet 2 in the local ARP entry.

Specifically, the PM 1 sends the layer 2 packet 4 to the network interface card 1 of the layer 2 gateway 200 through the layer 2 communication tunnel 30.

Step 307: The layer 2 gateway 200 modifies the layer 2 packet 4, and sends a modified layer 2 packet 4 to the device manager 2031 by using the network interface card 2.

The layer 2 gateway 200 queries the local ARP entry based on the destination IP address (192.168.0.2) of the layer 2 packet 4, to determine VM 1 MAC, modify the destination MAC address of the layer 2 packet 4 from L2 MAC 1 to VM 1 MAC, and modify the source MAC address from PM 1 MAC to L2 MAC 2.

It should be noted that the control platform 201 may send the correspondence between 192.168.0.2 and VM 1 MAC to the layer 2 gateway 200 in advance, and the layer 2 gateway 200 records the correspondence between 192.168.0.2 and VM 1 MAC in the local ARP entry.

Step 308: The device manager 2031 forwards the modified layer 2 packet 4 to the VM 1.

In this step, after receiving the layer 2 packet 4, the VM 1 obtains the IP packet 4 from the data part of the layer 2 packet 2, and obtains the reply information 2 from the data part of the IP packet 2.

In this way, the VM 1 obtains the reply information 2 generated by the PM 1, and subsequently, when the VM 1 communicates with the PM 1, the VM 1 does not need to send an ARP request packet. The VM 1 can perform layer 2 communication with the PM 1 through the layer 2 gateway 200 and the layer 2 communication tunnel 30 only by constructing, based on the local ARP entry, a layer 2 packet whose destination MAC address is L2 MAC 2 and whose destination IP address is 192.168.0.2.

In conclusion, the layer 2 gateway 200 is separately connected to the subnet 1 and the subnet 2 that have a same private address segment, performs a proxy reply to the ARP request packet, and performs MAC translation on the layer 2 packet. Therefore, from a perspective of the PM 1 and the VM 1, the subnet 1 and the subnet 2 belong to a same broadcast domain, and the VM 1 of the on-cloud data center and the PM 1 of the on-premises data center implement layer 2 interworking through the layer 2 gateway 200.

It should be noted that, in the foregoing embodiment, the device manager 2031 intercepts the ARP request packet 2 sent by the VM 1, and directly sends the ARP reply packet 2 to the VM 1, to notify the VM 1 that the MAC address corresponding to 192.168.0.4 is L2 MAC 2. In some other examples of the present invention, the device manager 2031 may not intercept the ARP request packet 2 sent by the VM 1, but forward the ARP request packet 2 to the subnet 1 for broadcasting, so that the layer 2 gateway 200 connected to the subnet 1 by using the network interface card 2 may receive the ARP request packet 2 from the subnet 1, and generate an ARP reply packet based on the ARP request packet 2. The layer 2 gateway 200 sends the ARP reply packet to the VM 1 of the subnet 1 by using the network interface card 2, to notify the VM 1 that the MAC address corresponding to 192.168.0.4 is L2 MAC 2.

In this embodiment of the present invention, layer 2 interworking between a subnet 2 of an on-premises data center 10 and a subnet 1 of an on-cloud data center 20 may be supported, where the on-premises data center 10 and the on-cloud data center 20 have a same private address segment, and this greatly facilitates a scenario of switching from a hybrid cloud to a public cloud.

Switching from the hybrid cloud to the public cloud is to migrate an image of a device in the subnet 2 of the on-premises data center 10 to a virtual machine in the subnet 1 of the on-cloud data center 20, and disable the device in the subnet 2 after the migration succeeds.

For example, when the PM 1 needs to be migrated to the subnet 1 of the on-cloud data center 20, a user may create a VM 3 in the subnet 1, import an image of the PM 1 to the VM 3, and shut down the PM 1. Because the VM 3 is an image of the PM 1, the VM 3 has a private address 192.168.0.4 and a MAC address PM 1 MAC that are the same as those of the PM 1. When the VM 3 needs to actively communicate with the VM 1, an ARP request packet for 192.168.0.2 is broadcast in the subnet 1. An ARP reply packet that carries VM 1 MAC and that is returned by the VM 1 may be obtained, and the VM 3 may perform layer 2 communication with the VM 1 in the subnet 1 based on VM 1 MAC.

Based on a same principle, all devices in the subnet 2 may be migrated to the subnet 1 in a similar manner. After the devices in the subnet 2 are migrated to the subnet 1, private addresses and MAC addresses of the devices are the same as those before migration. Therefore, the private addresses and the MAC addresses of the devices in the subnet 2 do not need to be modified, and a network model of the subnet 2 may be completely migrated to the subnet 1. This greatly facilitates migration of devices at the on-premises data center to the public cloud.

Therefore, the layer 2 gateway is used to implement layer 2 interworking between the subnet 1 and the subnet 2. In the scenario of switching from the hybrid cloud to the public cloud, a network model of the on-premises data center can be completely retained in the public cloud.

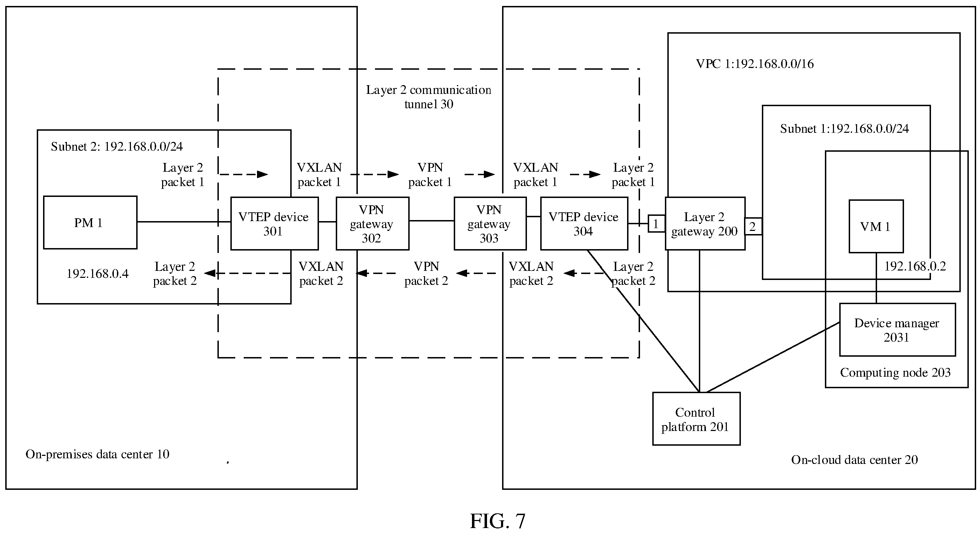

FIG. 7 is a diagram of a specific system structure of a hybrid cloud environment according to an embodiment of the present invention. Based on FIG. 4, FIG. 7 further shows a possible implementation of a layer 2 communication tunnel 30.

As shown in FIG. 7, the layer 2 communication tunnel 30 is implemented by using a VTEP device 301, a VTEP device 304, a VPN gateway 302, and a VPN gateway 303. The VTEP device 301 is connected to a subnet 2, and the VTEP device 304 is connected to a network interface card 1 of a layer 2 gateway 200. The VTEP device 301 is provided with a VTEP IP 1, the VTEP device 304 is provided with a VTEP IP 2, the VPN gateway 302 is provided with a public IP 1, and the VPN gateway 303 is provided with a public IP 2.

In this embodiment, the VTEP device 304 encapsulates a layer 2 packet 1 sent by a PM 1 into an inner layer of a VXLAN packet 1. A source IP address of an outer packet of the VXLAN packet 1 is the VTEP IP 1, a destination IP address is the VTEP IP 2, a source MAC address is a MAC address of the VTEP device 301, and a destination MAC address is a MAC address (for example, a MAC address of the VPN gateway 302) of a next-hop device to the VTEP IP 2. The VTEP device 301 sends the VXLAN packet 1 to the VPN gateway 302, and the VPN gateway 302 sets the VXLAN packet 1 in a data part of a VPN packet 1. A source IP address of a VPN header of the VPN packet 1 is the public IP 1 of the VPN gateway 302, a destination IP address is the public IP 2 of the VPN gateway 303, a source MAC address is a MAC address of the VPN gateway 302, and a destination MAC address is a MAC address of a next-hop device. The VPN gateway 302 sends the VPN packet 1 to the internet, and a routing device in the internet forwards the VPN packet 1 to the VPN gateway 303 based on a destination IP address of the VPN packet 1.

The VPN gateway 303 receives the VPN packet 1, obtains the VXLAN packet 1 from the data part of the VPN packet 1, and sends the VXLAN packet 1 to the VTEP device 304 based on the destination IP address (the VTEP IP 2) of the VXLAN packet 1.

The VTEP device 304 decapsulates the VXLAN packet 1, to obtain the layer 2 packet 1, and sends the layer 2 packet 1 to the network interface card 1 of the layer 2 gateway 200.

VXLAN encapsulation, VPN encapsulation, VPN decapsulation, and VXLAN decapsulation are implemented by using a device in the layer 2 communication tunnel 30, so that the subnet 2 of an on-premises data center 10 can implement a layer 2 interconnection with the layer 2 gateway 200 of a cloud data center 10. The PM 1 and the layer 2 gateway 200 are unaware of the foregoing encapsulation and decapsulation processes, and the layer 2 packet 1 is transmitted from the subnet 2 to the subnet 1 without a change.

Similarly, the VTEP device 304 encapsulates the layer 2 packet 2 sent by the layer 2 gateway 200 by using the network interface card 1 into an inner layer of a VXLAN packet 2. A source IP address of an outer packet of the VXLAN packet 2 is the VTEP IP 2, a destination IP address is the VTEP IP 1, a source MAC address is a MAC address of the VTEP device 304, and a destination MAC address is a MAC address of a next-hop device to the VTEP IP 1. The VTEP device 304 sends the VXLAN packet 2 to the VPN gateway 303, and the VPN gateway 302 encapsulates the VXLAN packet 2 into a data part of a VPN packet 2. A source IP address of a VPN header of the VPN packet 2 is the public IP 2 of the VPN gateway 303, a destination IP address is the public IP 1 of the VPN gateway 302, a source MAC address is a MAC address of the VPN gateway 303, and a destination MAC address is a MAC address of a next-hop device to the public IP 1. The VPN gateway 303 sends the VPN packet 2 to the internet, and a routing device in the internet forwards the VPN packet 2 to the VPN gateway 302 based on a destination IP address of the VPN packet 2.

The VPN gateway 302 receives the VPN packet 2, obtains the VXLAN packet 2 from the data part of the VPN packet 2, and sends the VXLAN packet 2 to the VTEP device 301 based on the destination IP address (the VTEP IP 1) of the VXLAN packet 2.

The VTEP device 301 decapsulates the VXLAN packet 2, to obtain the layer 2 packet 2, and sends the layer 2 packet 2 to the PM 1.

Similarly, VXLAN encapsulation, VPN encapsulation, VPN decapsulation, and VXLAN decapsulation are implemented by using the device in the layer 2 communication tunnel 30, so that the layer 2 gateway 200 of the cloud data center 10 can implement the layer 2 interconnection with the PM 1 of the on-premises data center 10. The PM 1 and the layer 2 gateway 200 are unaware of the foregoing encapsulation and decapsulation processes, and the layer 2 packet 2 is transmitted from the subnet 1 to the subnet 2 without a change.

Because the layer 2 packet 1 is encapsulated into the inner layer of the VXLAN packet 1, when the layer 2 packet 1 arrives at the layer 2 gateway 200 from the PM 1 through the layer 2 communication tunnel 30, a source MAC address and a destination MAC address of the layer 2 packet 1 remain unchanged. In addition, the layer 2 packet 2 is encapsulated into the inner layer of the VXLAN packet 2, and when the layer 2 packet 2 arrives at the PM 1 from the layer 2 gateway 200 through the layer 2 communication tunnel 30, a source MAC address and a destination MAC address of the layer 2 packet 2 remain unchanged. Therefore, the layer 2 communication tunnel 30 may implement layer 2 interworking between the PM 1 and the layer 2 gateway 200.

Similarly, an ARP request packet and an ARP reply packet between the PM 1 and the VTEP device 304 may also be transmitted through the layer 2 communication tunnel 30 in the foregoing manner.

In this embodiment, a VPN gateway is configured to implement cross-data center remote communication, a VTEP device is configured to implement layer 2 interworking, and the VPN gateway and the VTEP device may cooperate to implement cross-data center remote layer 2 interworking.

In another embodiment of the present invention, the VPN gateway may be replaced with another remote connection gateway, for example, a direct connect gateway. The VTEP device accesses, by using the direct connect gateway, a direct connect network provided by an operator, and does not need to perform VPN encapsulation and decapsulation operations on a VXLAN packet. For example, a local direct connect gateway may directly send the VXLAN packet to the direct connect network, and a routing device in the direct connect network forwards the VXLAN packet to a peer direct connect gateway based on a destination IP address of the VXLAN packet.

Further, this embodiment of the present invention is not limited to encapsulating or decapsulating packets in the subnet 1 and the subnet 2 based only on a VXLAN technology. In this embodiment of the present invention, any large layer 2 encapsulation/decapsulation technology may also be used to implement a similar function. For example, it is feasible to replace the VXLAN technology with GRE technology to implement packet encapsulation and decapsulation.

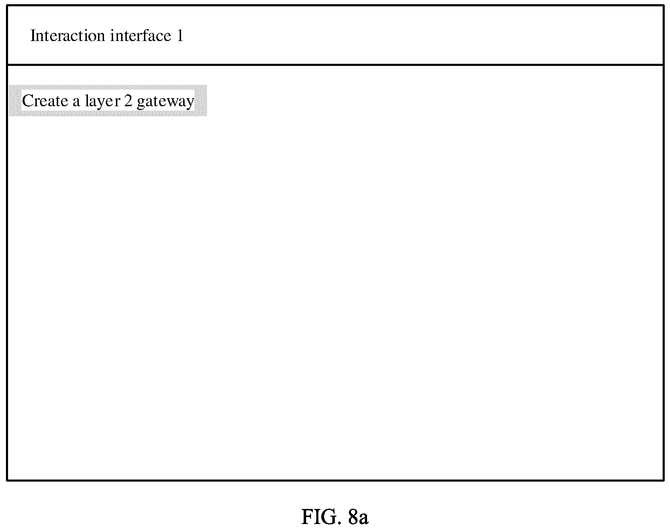

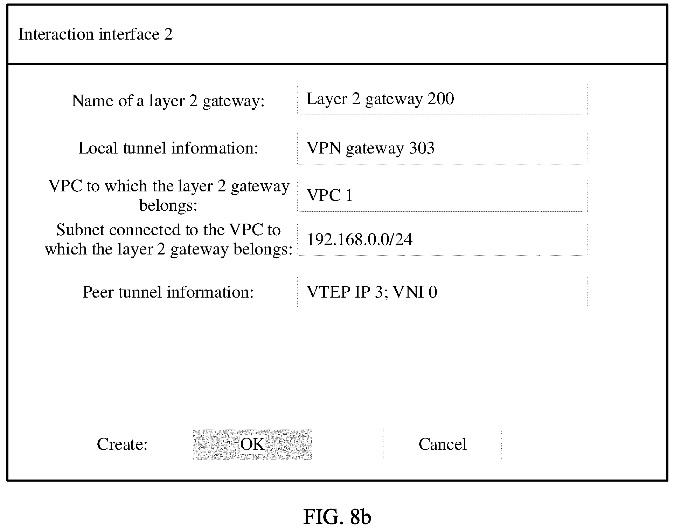

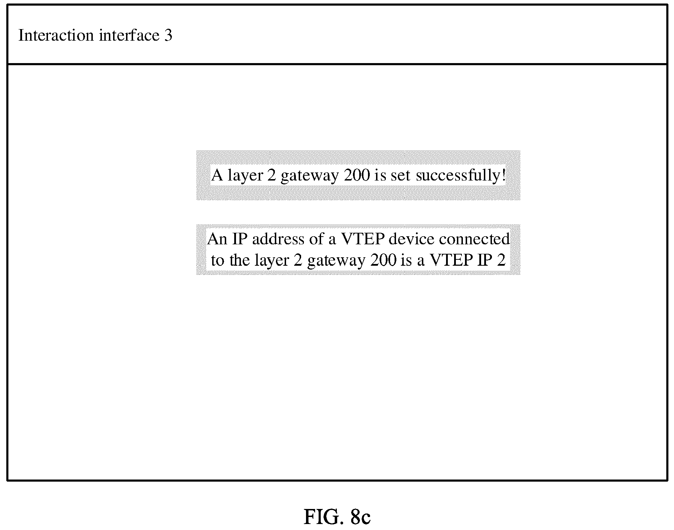

FIG. 8a to FIG. 8c are diagrams of interaction interfaces provided by a control platform according to an embodiment of the present invention. As shown in FIG. 8a, a control platform 201 provides an interaction interface 1, and a selection box "Create a layer 2 gateway" is set in the interaction interface 1. When a user taps the selection box, an interaction interface 2 shown in FIG. 8b is displayed. In the interaction interface 2, the user enters configuration information, and the configuration information includes a name of a to-be-created layer 2 gateway, local tunnel information, a VPC to which the to-be-created layer 2 gateway belongs, a subnet connected to the layer 2 gateway in the VPC to which the layer 2 gateway belongs, and peer tunnel information. After the user taps a button "OK", an interface shown in FIG. 8c is displayed. The interface indicates that the layer 2 gateway 200 is set successfully.

For example, the following provides descriptions with reference to the layer 2 communication tunnel shown in FIG. 7. The user may enter (or select) a VPN gateway 303 in a local tunnel information input box, and the user may enter a VTEP IP 3 of a VTEP device 301 and a VNI 0 of a subnet 2 in a peer tunnel information input box. The VNI 0 is set by the VTEP device 301, and the user has full management permission on the VTEP device 301 at an on-premises data center 10, so that the VTEP IP 1 and the VNI 0 are parameters known by the user.

It should be noted that, in this embodiment, it is assumed that a VPN connection is established between the VPN gateway 302 and the VPN gateway 303, and the user simply needs to enter the VPN gateway 303 to be connected to the layer 2 gateway 200, so that the layer 2 gateway 200 can be remotely connected to an on-premises data center 10.

Specifically, the user may create the VPN gateway 303 by using a VPN service provided by the on-cloud data center 20, and set the VPN gateway 303 to be connected to the VPN gateway 302.

It should be noted that, in FIG. 8c, when an interaction interface 3 prompts that the layer 2 gateway 200 is set successfully, the user may be further notified of a VTEP IP 2 of the VTEP device 304 connected to the layer 2 gateway 200. The user obtains the VTEP IP 2 from the interaction interface 3, and disposes the VTEP device 301 at the on-premises data center 10, so that the VTEP device 301 records the VTEP IP 2. When performing VXLAN encapsulation, the VTEP device 301 may set an outer destination IP address of the VXLAN packet to the VTEP IP 2. After the encapsulated VXLAN packet arrives at the on-cloud data center 20 through the VPN gateway 303, the VXLAN packet is routed to the VTEP device 304 based on the outer destination IP address VTEP IP 2 in an internal network of the on-cloud data center 20.

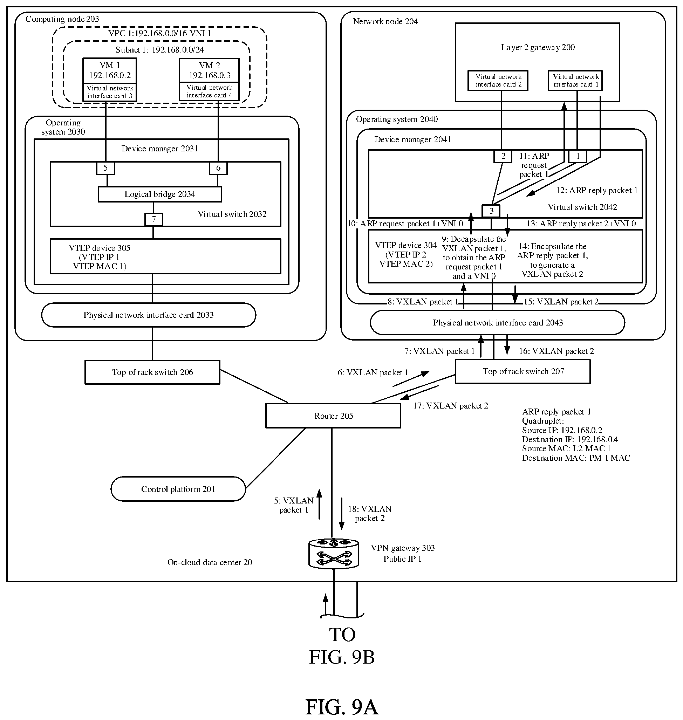

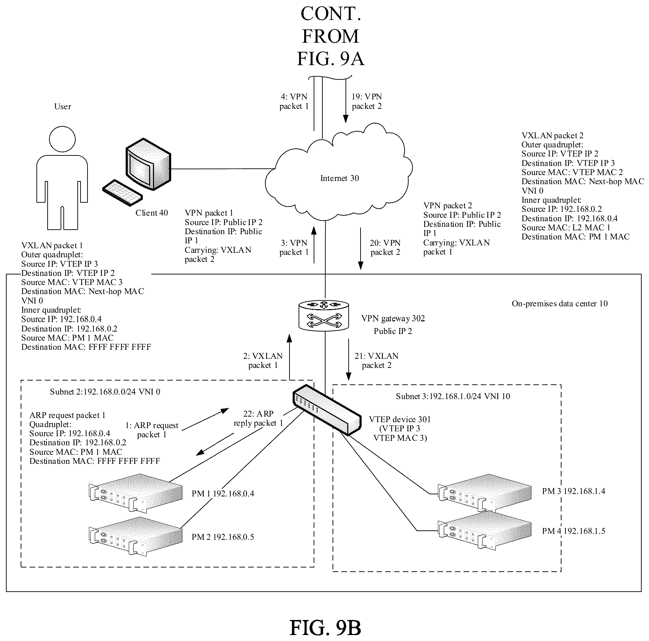

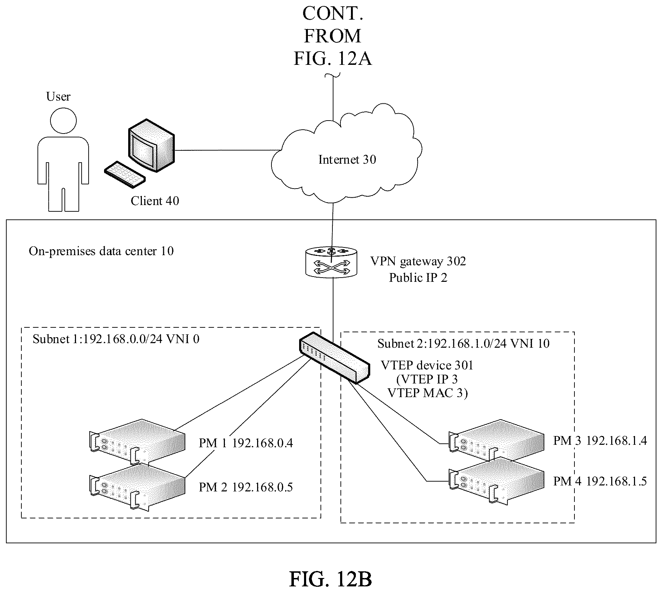

For ease of understanding, refer to FIG. 9A and FIG. 9B to FIG. 12A and FIG. 12B. FIG. 9A and FIG. 9B to FIG. 12A and FIG. 12B show a possible specific implementation of the hybrid cloud environment disclosed in FIG. 7.

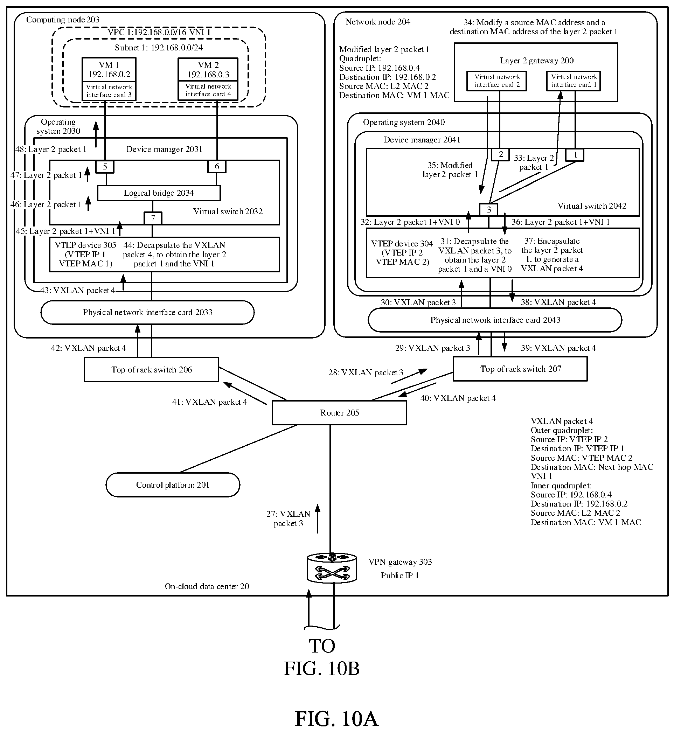

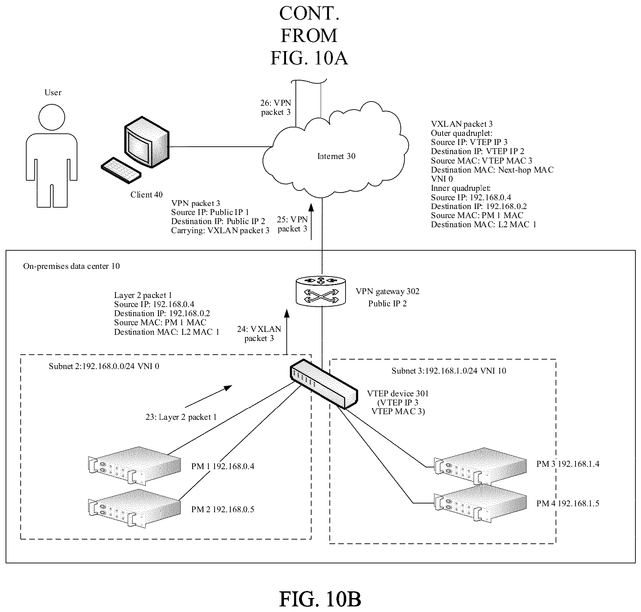

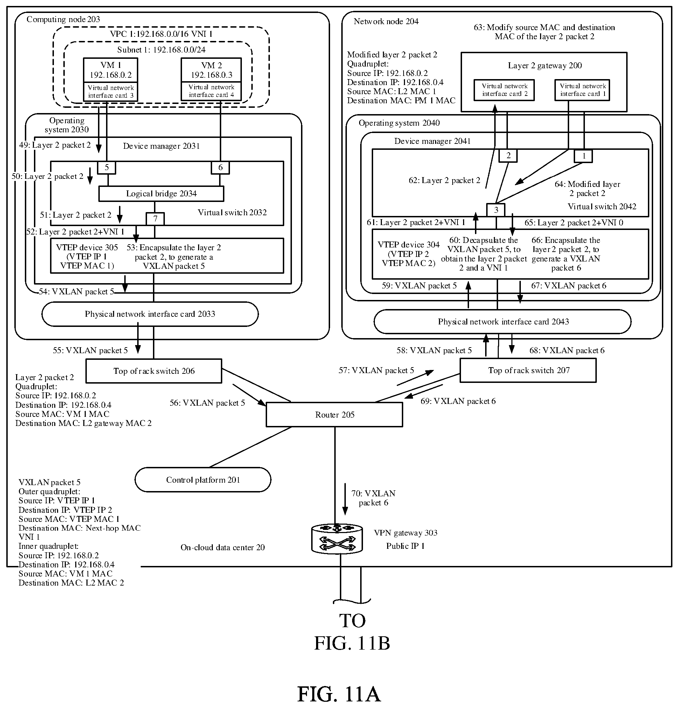

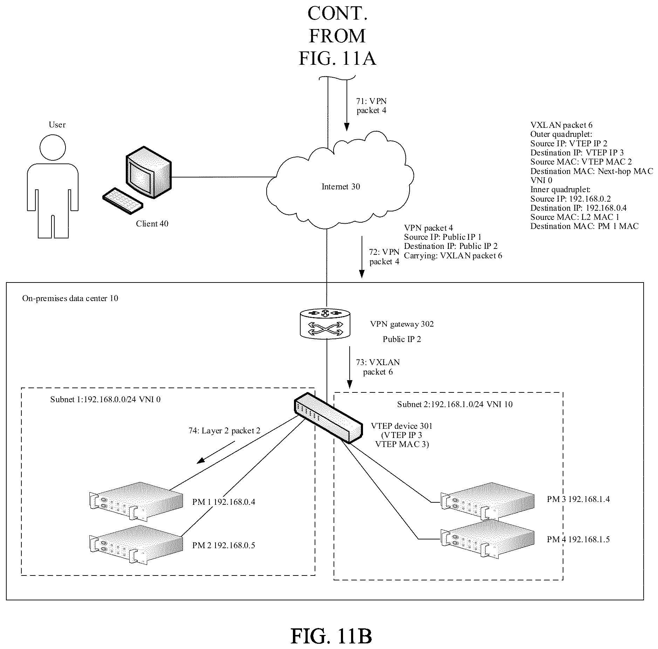

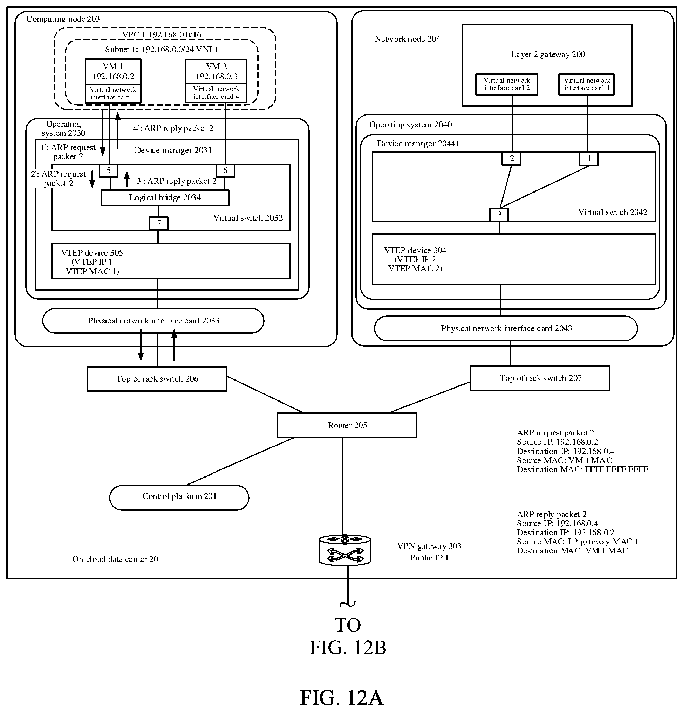

Hybrid cloud environments shown in FIG. 9A and FIG. 9B to FIG. 12A and FIG. 12B are completely the same. A difference lies in that FIG. 9A and FIG. 9B describe in detail a packet flow direction in which a layer 2 gateway 200 performs an ARP proxy reply to a PM 1, FIG. 10A and FIG. 10B describe in detail a packet flow direction in which the PM 1 actively sends a packet to a VM 1, FIG. 11A and FIG. 11B describe in detail a packet flow direction in which the VM 1 replies to the PM 1, and FIG. 12A and FIG. 12B describe in detail a packet flow direction in which a device manager performs an ARP proxy reply to the VM 1.

In addition, compared with FIG. 7, same reference numerals in FIG. 9A and FIG. 9B to FIG. 12A and FIG. 12B represent a same device.

First, as shown in FIG. 9A and FIG. 9B, a hybrid cloud communication system includes an on-cloud data center 20 and an on-premises data center 10. The on-cloud data center 20 and the on-premises data center 10 separately access the internet 30. A user accesses the internet 30 by using a client 40. The user has management permission on all devices at the on-premises data center 10. In addition, the user has management permission only on a VPC 1, the layer 2 gateway 200, and a VPN gateway 303 at the on-cloud data center 20. By operating the client 40, the user accesses an interaction interface or API provided by the control platform 201, to enter a command for managing the VPC 1, the layer 2 gateway 200, or the VPN gateway 303. The control platform 201 manages the VPC 1, the layer 2 gateway 200, or the VPN gateway 303 according to the command.

It should be noted that the client 40 is, for example, a terminal device such as a mobile phone, a personal computer, or a personal tablet computer. In another embodiment, the client 40 may alternatively be disposed at the on-premises data center 10.

The on-cloud data center 20 includes the control platform 201, a computing node 203, a network node 204, a router 205, a top of rack (Top of rack) switch 206, and a top of rack switch 207. The top of rack switch 206, the top of rack switch 207, the control platform 201, the VPN gateway 303, and the control platform 201 are separately connected to the router 205.

The computing node 203 and the network node 204 are, for example, servers. Virtual machines that are a VM 1 and the VM 2 provided by a public cloud service run on the computing node 203, and the layer 2 gateway 200 runs on the network node 204.

The computing node 203 includes the VM 1, the VM 2, an operating system 2030, and a physical network interface card 2033. A device manager 2031 is disposed in the operating system 2030. The device manager 2031 includes a virtual switch 2032 and a VTEP device 305. A virtual port 5, a virtual port 6, a virtual port 7, and a logical bridge 2034 are disposed in the virtual switch 2032, and the logical bridge 2034 is separately connected to the virtual port 5, the virtual port 6, and the virtual port 7. A virtual network interface card 3 is disposed on the VM 1, and a virtual network interface card 4 is disposed on the VM 2. The virtual network interface card 3 is connected to the virtual port 5, the virtual network interface card 4 is connected to the virtual port 6, and the virtual port 7 is connected to the VTEP device 305. The VTEP device 305 is further connected to the physical network interface card 2033, and the computing node 203 accesses the top of rack switch 206 by using the physical network interface card 2033.

The VM 1 and the VM 2 are disposed in a subnet 1 of the VPC 1, a tunnel identifier of the VPC 1 is a VNI 1, and the logical bridge 2034 is configured to implement a switch function of subnet 1.

The network node 204 includes the layer 2 gateway 200, an operating system 2040, and a physical network interface card 2043. A device manager 2041 is disposed on the control platform 201. The device manager 2041 includes a virtual switch 2042 and a VTEP device 304. The virtual switch 2042 includes a virtual port 1, a virtual port 2, and a virtual port 3. The virtual port 3 is connected to the virtual port 2, and the virtual port 3 is further connected to the virtual port 1. The VTEP device 304 is connected to the physical network interface card 2043, and the computing node 204 accesses the top of rack switch 207 by using the physical network interface card 2043.

The layer 2 gateway 200 is provided with a virtual network interface card 1 and a virtual network interface card 2. The virtual network interface card 1 is connected to the virtual port 1, the virtual network interface card 2 is connected to the virtual port 2, and the virtual port 3 is connected to the VTEP device 304.

The on-premises data center 10 includes a VPN gateway 302, a VTEP device 301, a subnet 2, and a subnet 3. A private address segment of the subnet 2 is the same as that of the subnet 1 (both are 192.168.0.0/24), physical machines that are the PM 1 and a PM 2 are disposed in the subnet 2, and physical machines that are a PM 3 and a PM 4 are disposed in the subnet 3.

The VTEP device 301 is, for example, a VXLAN switch. The VXLAN switch has a switch function and a VXLAN encapsulation and decapsulation function. The subnet 2 and the subnet 3 are managed by the VTEP device 301. The VTEP device 301 sets a tunnel identifier of the subnet 2 to a VNI 0, and sets a tunnel identifier of the subnet 3 to the VNI 1.

In this embodiment, the VTEP device 305 and the VTEP device 304 are implemented by using software. Specifically, the VTEP device 305 is implemented by using a kernel of the operating system 2030 of the computing node 203, the VTEP device 304 is implemented by using a kernel of the operating system 2040 of the network node 204, and the VTEP device 301 is implemented by using hardware, for example, the VXLAN switch.

In another embodiment of the present invention, the VTEP device 301 may also be implemented by using a kernel of an operating system. In this case, the VTEP device 301 is connected to a virtual machine that runs in an operating system of a physical machine at the on-premises data center 10.

Further, in the hybrid cloud communication system in this embodiment, network parameters of all devices are separately set as follows:
a private address of the VM 1 is 192.168.0.2; and the virtual network interface card 3 of the VM 1 has a MAC address: VM 1 MAC;
a private address of the VM 2 is 192.168.0.3; and the virtual network interface card 4 of the VM 2 has a MAC address: VM 2 MAC;
the VTEP device 305 is configured with a VTEP IP address: VTEP IP 1;
the VTEP device 304 is configured with a VTEP IP address: VTEP IP 2;
the VTEP device 302 is configured with a VTEP IP address: VTEP IP 3;
the VPN gateway 302 is configured with a public IP 1;
the VPN gateway 303 is configured with a public IP 2;
the tunnel identifier of the subnet 1 is the VNI 1;
a tunnel identifier of the subnet 2 is the VNI 0;
a MAC address of the virtual network interface card 1 of the layer 2 gateway 200: L2 MAC 1; and
a MAC address of the virtual network interface card 2 of the layer 2 gateway 200: L2 MAC 2.

The foregoing network parameters are all recorded on the control platform 201. It should be noted that the public IP 1 of the VPN gateway 302, the VNI 0 of the subnet 2, and the VTEP IP 3 of the VTEP device 301 are entered into the control platform 201 by the user by operating the client 40. The VTEP IP 3 and the VNI 0 are input on the client 40 when the layer 2 gateway 200 is created. For details, refer to the interaction interface 2 shown in FIG. 8b. The public IP 1 of the VPN gateway 302 is input on the client 40 when a VPN connection is configured.

At the on-premises data center 10:
Private address of the PM 1: 192.168.0.4; MAC address of the PM 1: PM 1 MAC;
Private address of the PM 2: 192.168.0.5; MAC address of the PM 2: PM 2 MAC;
Private address of the PM 3: 192.168.1.4; MAC address of the PM 3: PM 3 MAC; and
Private address of the PM 4: 192.168.1.5; MAC address of the PM 4: PM 4 MAC.

The control platform 201 has no management permission on the on-premises data center 10. The control platform 201 does not record network addresses of physical machines at the on-premises data center 10, and these network addresses need to be learned of by the layer 2 gateway 200.

The router 205, the top of rack switch 206, the top of rack switch 207, the physical network interface card 2033, and the physical network interface card 2043 are all configured with an IP address and have a packet forwarding function.

The router 205 records a routing rule. When receiving a packet whose destination IP address is the VTEP IP 1, the router sends the packet to the top of rack switch 206; when receiving a packet whose destination IP address is the VTEP IP 2, the router sends the packet to the top of rack switch 207; and when receiving a packet whose destination IP address is the VTEP IP 3, the router sends the packet to the VPN gateway 303.

The physical network interface card 2033 forwards a packet received from the VTEP device 305 to the top of rack switch 206, and forwards a packet received from the top of rack switch 206 to the VTEP device 305. The top of rack switch 206 forwards a packet received from the physical network interface card 2033 to the router 205, and forwards a packet received from the router 205 to the physical network interface card 2033.

The physical network interface card 2043 forwards a packet received from the VTEP device 304 to the top of rack switch 207, and forwards a packet received from the top of rack switch 207 to the VTEP device 304. The top of rack switch 207 forwards a packet received from the physical network interface card 2043 to the router 205, and forwards a packet received from the router 205 to the physical network interface card 2043.

A VPN connection is pre-established between the VPN gateway 303 and the VPN gateway 302. The public IP 1 of the VPN gateway 302 is input from the client 40 when the VPN connection is configured.

Further:
the VTEP device 305 records:
a correspondence between the VNI 1 and the VTEP IP 2; and
the VTEP device 304 records:
   a correspondence between the VNI 1 and the VTEP IP 1; and
   a correspondence between the VNI 0 and the VTEP IP 3.

The virtual port 3 records a correspondence between the virtual port 2 and the VNI 1 and a correspondence between the virtual port 1 and the VNI 0.

The foregoing correspondences are all set and recorded by the control platform 201.

In this embodiment of the present invention, the layer 2 gateway 200 is connected, by using the virtual network interface card 1, to the virtual port 1 bound to the VNI 0, so that the layer 2 gateway 200 is connected to the subnet 2. In addition, the layer 2 gateway 200 is connected, by using the virtual network interface card 2, to the virtual port 2 bound to the VNI 1, so that the layer 2 gateway 200 is connected to the subnet 1.

Based on the foregoing settings, FIG. 9A and FIG. 9B describe a method in which a PM 1 actively communicates with a VM 1. The method includes the following steps.

Step 1: The PM 1 constructs an ARP request packet 1, and sends the ARP request packet 1 to a VTEP device 301.

The PM 1 records a private address 192.168.0.2 of the VM 1, and broadcasts the ARP request packet 1 in a subnet 2 to request a MAC address corresponding to 192.168.0.2. A quadruplet of the ARP request packet 1 is as follows:
Source IP: 192.168.0.4;
Destination IP: 192.168.0.2;
Source MAC: the PM 1 MAC; and
Destination MAC: FFFF FFFF FFFF.

Step 2: A VTEP device 302 sends a VXLAN packet 1 to a VPN gateway 302.

The VTEP device 302 receives the ARP request packet 1 broadcast by the PM 1 in the subnet 2, and encapsulates the ARP request packet 1 into an inner packet of the VXLAN packet 1. A destination IP address of an outer packet of the VXLAN packet 1 is a VTEP IP 2 (a VTEP IP of a VTEP device 304), and a VXLAN header of the VXLAN packet 1 further carries a tunnel identifier VNI 0 allocated by the VTEP device 302 to the subnet 2.

An inner quadruplet and an outer quadruplet of the VXLAN packet 1 are as follows:
Outer quadruplet:
Source IP: VTEP IP 3;
Destination IP: VTEP IP 2;
Source MAC: VTEP MAC 3; and
Destination MAC: Next-hop MAC (a MAC address of a VPN gateway 303); and
Inner quadruplet:
   Source IP: 192.168.0.4;
   Destination IP: 192.168.0.2;
   Source MAC: PM 1 MAC; and
   Destination MAC: FFFF FFFF FFFF.

In this embodiment of the present invention, the layer 2 gateway 200 receives and intercepts the ARP request packet 1. Therefore, the VTEP device 302 needs to send, to the VTEP device 304 connected to the layer 2 gateway 200, the VXLAN packet 1 into which the ARP request packet 1 is encapsulated. Therefore, the outer destination IP address of the VXLAN packet 1 is the VTEP IP 2.

Step 3: The VPN gateway 302 sends a VPN packet 1 to the internet 30.

The VPN gateway 302 constructs the VPN packet 1, a data part of the VPN packet 1 carries the VXLAN packet 1, a destination IP address of a VPN header of the VPN packet 1 is a public IP 1 (a public IP of the VPN gateway 303), and a source IP address is a public IP 2 (a public IP of the VPN gateway 302).

Step 4: A routing device of the internet 30 forwards the VPN packet 1 to the VPN gateway 303 based on the destination IP address of the VPN packet 1.

Step 5: The VPN gateway 303 sends the VXLAN packet 1 to a router 205.

After receiving the VPN packet 1, the VPN gateway 302 removes the VPN header, obtains the VXLAN packet 1 from the data part, and sends the VXLAN packet 1 to the router 205.

Step 6: The router 205 sends the VXLAN packet 1 to a top of rack switch 207 based on the outer destination IP address of the VXLAN packet 1.

Step 7: The top of rack switch 207 sends the VXLAN packet 1 to a physical network interface card 2043.

Step 8: The physical network interface card 2043 sends the VXLAN packet 1 to the VTEP device 304.

Step 9: The VTEP device 304 decapsulates the VXLAN packet 1, obtains the ARP request packet 1 from the inner packet, and obtains the VNI 0 from the VXLAN header.

Step 10: The VTEP device 304 sends the ARP request packet 1 and the VNI 0 to a virtual port 3.

Step 11: The virtual port 3 sends the ARP request packet 1 to a virtual port 1, and the ARP request packet 1 arrives at a virtual network interface card 1 through the virtual port 1.

As discussed above, the virtual port 3 records a correspondence between the VNI 0 and the virtual port 1, and records a correspondence between a VNI 1 and a virtual port 2.

Therefore, the virtual port 3 selects the virtual port 1 based on the VNI 0, and sends the ARP request packet 1 to the virtual port 1, so that the ARP request packet 1 arrives at the virtual network interface card 1 of the layer 2 gateway 200 through the virtual port 1.

Step 12: The layer 2 gateway 200 generates an ARP reply packet 1 based on the ARP request packet 1, and sends the ARP reply packet 1 to the virtual port 1 by using the virtual network interface card 1, where the ARP reply packet 1 arrives at the virtual port 3 through the virtual port 1.

In this step, the layer 2 gateway 200 determines, based on a destination MAC address FFFF FFFF FFFF of the ARP request packet 1, that the ARP request packet 1 is a broadcast packet. In this case, the layer 2 gateway 200 needs to intercept the ARP request packet 1, so that the broadcast packet cannot arrive at the subnet 1.

Correspondingly, the layer 2 gateway 200 constructs the ARP reply packet 1, and a quadruplet of the ARP reply packet 1 is as follows:
Source IP: 192.168.0.2;
Destination IP: 192.168.0.4;
Source MAC: L2 MAC 1; and
Destination MAC: PM 1 MAC.

The ARP reply packet 1 is used to notify the PM 1 that a MAC address corresponding to 192.168.0.2 is a MAC address L2 MAC 1 of the virtual network interface card 1.

Further, in this step, the layer 2 gateway 200 learns of and records a correspondence between 192.168.0.4 and PM 1 MAC in the ARP request packet 1. Specifically, the layer 2 gateway 200 records the correspondence in a local ARP entry.

Step 13: The virtual port 3 receives the ARP reply packet 1 from the virtual port 1, determines the VNI 0 based on the correspondence between the virtual port 1 and the VNI 0, and sends the ARP reply packet 1 and the VNI 0 to the VTEP device 304.

Step 14: The VTEP device 304 determines the VTEP IP 3 (a VTEP IP of the VTEP device 301) based on the VNI 0, and encapsulates the ARP reply packet 1 to generate a VXLAN packet 2, where a VXLAN header of the VXLAN packet 2 carries the VNI 0, and an outer destination IP address of the VXLAN packet 2 is the VTEP IP 3.

An inner quadruplet and an outer quadruplet of the VXLAN packet 2 are as follows:
Outer quadruplet:
Source IP: VTEP IP 2;
Destination IP: VTEP IP 3;
Source MAC: VTEP MAC 2; and
Destination MAC: Next-hop MAC (a MAC address of a physical network interface card 2043); and
Inner quadruplet:
   Source IP: 192.168.0.2;
   Destination IP: 192.168.0.4;
   Source MAC: L2 MAC 1; and
   Destination MAC: PM 1 MAC.

Because the ARP reply packet 1 needs to be sent to the PM 1, the destination IP address of the VXLAN packet 2 is the VTEP IP 3 of the VTEP device 301 connected to the PM 1.

Step 15: The VTEP device 304 sends the VXLAN packet 2 to the physical network interface card 2043.

Step 16: The physical network interface card 2043 sends the VXLAN packet 2 to the top of rack switch 207.

Step 17: The top of rack switch 207 sends the VXLAN packet 2 to the router 205.

Step 18: The router 205 sends the VXLAN packet 2 to the VPN gateway 303 based on the outer destination IP address of the VXLAN packet 2.

Step 19: The VPN gateway 303 receives the VXLAN packet 2, generates a VPN packet 2, and sends the VPN packet 2 to the internet 30.

A data part of the VPN packet 2 carries the VXLAN packet 2, a destination IP address of a VPN header of the VPN packet 2 is the public IP 2 (the public IP of the VPN gateway 302), and a source IP address is the public IP 1 (the public IP of the VPN gateway 303).

Step 20: The routing device of the internet 30 forwards the VPN packet 2 to the VPN gateway 302 based on the destination IP address of the VPN packet 2.

Step 21: The VPN gateway 302 receives the VPN packet 2, removes the VPN header of the VPN packet 2, obtains the VXLAN packet 2 from the data part of the VPN packet 2, and sends the VXLAN packet 2 to the VTEP device 302 based on the outer destination IP address of the VXLAN packet 2.

Step 22: The VTEP device 302 sends the ARP reply packet 1 to the PM 1.

In this step, the VTEP device 302 receives the VXLAN packet 2, decapsulates the VXLAN packet 2, to obtain the inner ARP reply packet 1 and obtain the VNI 0 carried in the VXLAN header of the VXLAN packet 2, selects the subnet 2 based on the VNI 0, and sends the ARP reply packet 1 to the PM 1 in the subnet 2.

The PM 1 receives the ARP reply packet 1, determines, based on a source MAC address (L2 MAC 1) of the ARP reply packet 1, that the MAC address corresponding to 192.168.0.2 is L2 MAC 1, and the PM 1 records 192.168.0.2 and L2 MAC 1 in a local ARP entry of the PM 1.

Refer to FIG. 9A and FIG. 9B and FIG. 10A and FIG. 10B. FIG. 10A and FIG. 10B show a method in which the PM 1 communicates with the VM 1 after obtaining L2 MAC 1. The method includes the following steps.

Step 23: The PM 1 sends a layer 2 packet 1 to the VTEP device 302.

A data part of the layer 2 packet 1 carries an IP packet 1, and a data part of the IP packet 1 carries request information 1.

A quadruplet of the layer 2 packet 1 is as follows:
Source IP: 192.168.0.4;
Destination IP: 192.168.0.2;
Source MAC: PM 1 MAC; and
Destination MAC: L2 MAC 1.

In this case, the PM 1 considers that a MAC address of the VM 1 is L2 MAC 1.

Step 24: The VTEP device 302 sends a VXLAN packet 3 to the VPN gateway 303.

The VTEP device 302 encapsulates the layer 2 packet 1 into an inner packet of the VXLAN packet 3. A destination IP address of an outer packet of the VXLAN packet 3 is the VTEP IP 2 (the VTEP IP of the VTEP device 304), and a VXLAN header of the VXLAN packet 3 carries a tunnel identifier VNI 0 of the subnet 2.

An inner quadruplet and an outer quadruplet of the VXLAN packet 3 are as follows:
Outer quadruplet:
Source IP: VTEP IP 3;
Destination IP: VTEP IP 2;
Source MAC: VTEP MAC 3; and
Destination MAC: Next-hop MAC (a MAC address of the VPN gateway 302); and
Inner quadruplet:
   Source IP: 192.168.0.4;
   Destination IP: 192.168.0.2;
   Source MAC: PM 1 MAC; and
   Destination MAC: L2 MAC 1.

Step 25: The VPN gateway 302 sends a VPN packet 3 to the internet 30.

After receiving the VXLAN packet 3, the VPN gateway 303 constructs the VPN packet 3 based on the VXLAN packet 3. A data part of the VPN packet 3 carries the VXLAN packet 3. A destination IP address of a VPN header of the VPN packet 3 is the public IP 1 (the public IP of the VPN gateway 303), and a source IP address is the public IP 2 (the public IP of the VPN gateway 302).

Step 26: The routing device of the internet 30 forwards the VPN packet 3 to the VPN gateway 303 based on the destination IP address of the VPN packet 3.

Step 27: The VPN gateway 302 sends the VXLAN packet 3 to the router 205.

After receiving the VPN packet 3, the VPN gateway 302 removes the VPN header, obtains the VXLAN packet 3 from the data part of the VPN packet 3, and sends the VXLAN packet 3 to the router 205.

Step 28: The router 205 sends the VXLAN packet 1 to the top of rack switch 207 based on the outer destination IP address of the VXLAN packet 1.

Step 29: The top of rack switch 207 sends the VXLAN packet 3 to the physical network interface card 2043.

Step 30: The physical network interface card 2043 sends the VXLAN packet 3 to the VTEP device 304.

Step 31: The VTEP device 304 decapsulates the VXLAN packet 3, to obtain the layer 2 packet 1 and the VNI 0.

Step 32: The VTEP device 304 sends the layer 2 packet 1 and the VNI 0 to the virtual port 3.

Step 33: The virtual port 3 sends the layer 2 packet 1 to the virtual port 1.

The virtual port 3 selects the virtual port 1 based on the VNI 0, and sends the layer 2 packet 1 to the virtual port 1, so that the layer 2 packet 1 arrives at the virtual network interface card 1 of the layer 2 gateway 200 through the virtual port 1.

Step 34: The layer 2 gateway 200 modifies the layer 2 packet 1.

The layer 2 gateway 200 obtains the layer 2 packet 1 from the virtual network interface card 1, determines, based on the destination MAC address of the layer 2 packet 1, that the layer 2 packet 1 is not a broadcast packet, and searches the local ARP entry for a MAC address VM 1 MAC corresponding to the destination IP address (192.168.0.2) of the layer 2 packet 1.

The layer 2 gateway 200 modifies a source MAC address of the layer 2 packet 1 to L2 MAC 2, and modifies the destination MAC address to VM 1 MAC. A quadruplet of the modified layer 2 packet 1 is as follows:
Source IP: 192.168.0.4;
Destination IP: 192.168.0.2;
Source MAC: L2 MAC 2; and
Destination MAC: VM 1 MAC.

A correspondence between 192.168.0.2 and VM 1 MAC may be sent by the control platform 201 to the layer 2 gateway 200 in advance after the layer 2 gateway 200 is successfully created (or directly set in the layer 2 gateway 200 when the layer 2 gateway 200 is created). The layer 2 gateway 200 receives the correspondence, and records the correspondence in the local ARP entry of the layer 2 gateway 200.

Step 35: The layer 2 gateway 200 sends the modified layer 2 packet 1 to the virtual port 3.

The layer 2 gateway 200 sends the modified layer 2 packet 1 to the virtual port 2 by using the virtual network interface card 2, and the modified layer 2 packet 1 is transmitted to the virtual port 3 through the virtual port 2.

Step 36: The virtual port 3 receives the layer 2 packet 1 from the virtual port 2, determines the VNI 1 based on the virtual port 2, and sends the layer 2 packet 1 and the VNI 1 to the VTEP device 304.

Step 37: The VTEP device 304 determines the VTEP IP 1 (a VTEP IP of the VTEP device 305) based on the VNI 1, and performs VXLAN encapsulation on the layer 2 packet 2 to generate a VXLAN packet 4, where a VXLAN header of the VXLAN packet 4 carries the VNI 1, and an outer destination IP address of the VXLAN packet 4 is the VTEP IP 1.

An inner quadruplet and an outer quadruplet of the VXLAN packet 4 are as follows:
Outer quadruplet:
Source IP: VTEP IP 2;
Destination IP: VTEP IP 1;
Source MAC: VTEP MAC 2; and
Destination MAC: Next-hop MAC; and
Inner quadruplet:
   Source IP: 192.168.0.4;
   Destination IP: 192.168.0.2;
   Source MAC: L2 gateway MAC 2; and
   Destination MAC: VM 1 MAC.

Step 38: The VTEP device 304 sends the VXLAN packet 4 to the physical network interface card 2043.

Step 39: The physical network interface card 2043 sends the VXLAN packet 4 to the top of rack switch 207.

Step 40: The top of rack switch 207 sends the VXLAN packet 4 to the router 205.

Step 41: The router 205 sends the VXLAN packet 4 to a top of rack switch 206 based on the outer destination IP address of the VXLAN packet 4.

Step 42: The top of rack switch 206 sends the VXLAN packet 4 to the physical network interface card 2033.

Step 43: The physical network interface card 2033 sends the VXLAN packet 4 to the VTEP device 305.

Step 44: The VTEP device 305 decapsulates the VXLAN packet 4, to obtain the layer 2 packet 1 and the VNI 1.

Step 45: The VTEP device 305 sends the layer 2 packet 1 and the VNI 1 to the virtual port 7.

Step 46: The virtual port 7 sends the layer 2 packet 1 to the logical bridge 2034.

In this step, the virtual port 7 receives the layer 2 packet 1 and the VNI 1, selects the logical bridge 2034 based on the VNI 1, and sends the layer 2 packet 2 to the logical bridge 2034.

It should be noted that in some other examples, a VM of another VPC runs on the computing node 203. In this case, a virtual switch 2032 includes a plurality of logical bridges, each logical bridge is bound to a VNI of a different VPC, and the virtual port 7 selects a corresponding logical bridge based on the VNI.

In this embodiment, the VNI 1 is bound to the logical bridge 2034, and the virtual port 3 determines, by the VNI 1, to send the layer 2 packet 2 to the logical bridge 2034.

Step 47: The logical bridge 2034 sends, based on the destination MAC address (VM 1 MAC) of the layer 2 packet 1, the layer 2 packet 1 to a virtual port 5 connected to a virtual network interface card 3 of the VM 1.

Step 48: The virtual port 5 sends the layer 2 packet 1 to the virtual network interface card 3 of the VM 1.

The VM 1 obtains the layer 2 packet 1 from the virtual network interface card 3, obtains the IP packet 1 from the data part of the layer 2 packet 1, obtains the request information 1 from the data part of the IP packet 1, and replies to the request information 1 to generate reply information 1.

After generating the reply information 1, the VM 1 constructs the layer 2 packet 2. The data part of the layer 2 packet 2 carries the IP packet 2, and the data part of the IP packet 2 carries the reply information 1.

A quadruplet of the layer 2 packet 2 is as follows:
Source IP: 192.168.0.2;
Destination IP: 192.168.0.4;
Source MAC: VM 1 MAC; and
Destination MAC: L2 MAC 2.

The source IP address and the destination IP address of the layer 2 packet 2 are obtained by inverting the source IP address and the destination IP address of the layer 2 packet 1, and the source MAC address and the destination MAC address of the layer 2 packet 2 are obtained by inverting the source MAC address and the destination MAC address of the layer 2 packet 1.

In addition, the VM 1 records the correspondence between the source MAC address (L2 MAC 2) of the layer 2 packet 2 and the source IP address (192.168.0.4) of the layer 2 packet 2 in a local ARP entry of the VM 1.

Refer to FIG. 10A and FIG. 10B and FIG. 11A and FIG. 11B. FIG. 11A and FIG. 11B show a communication method in which the VM 1 performs a packet reply. As shown in FIG. 11A and FIG. 11B, the method includes the following steps.

Step 49: The VM 1 sends the layer 2 packet 2 to the virtual port 5 by using the virtual network interface card 3.

Step 50: The virtual port 5 sends the layer 2 packet 2 to the logical bridge 2034.

Step 51: The logical bridge 2034 sends the layer 2 packet 2 to the virtual port 7.

In this step, the logical bridge 2034 does not locally have a virtual port bound to L2 MAC 2. Therefore, the logical bridge 2034 sends the layer 2 packet 2 to the virtual port 7.

Step 52: The virtual port 7 sends the layer 2 packet 2 and the VNI 1 to the VTEP device 305.

In this step, the virtual port 7 obtains the layer 2 packet 2 from the logical bridge 2034, and the virtual port 7 determines the VNI 1 based on the logical bridge 2034.

Step 53: The VTEP device 305 performs the VXLAN encapsulation on the layer 2 packet 2, to generate a VXLAN packet 5.

The VTEP device 305 determines the VTEP IP 2 based on the VNI 1. An inner packet of the VXLAN packet 5 is the layer 2 packet 2, a VXLAN header of the VXLAN packet 5 carries the VNI 1, an outer destination IP address of the VXLAN packet 5 is the VTEP IP 2, and an outer source IP address is the VTEP IP 1.

An inner quadruplet and an outer quadruplet of the VXLAN packet 5 are as follows:
Outer quadruplet:
Source IP: VTEP IP 1;
Destination IP: VTEP IP 2;
Source MAC: VTEP MAC 1; and
Destination MAC: Next-hop MAC; and
Inner quadruplet:
   Source IP: 192.168.0.2;
   Destination IP: 192.168.0.4;
   Source MAC: VM 1 MAC; and
   Destination MAC: L2 MAC 2.

Step 54: The VTEP device 305 sends the VXLAN packet 5 to a physical network interface card 2033.

Step 55: The physical network interface card 2033 sends the VXLAN packet 5 to the top of rack switch 206.

Step 56: The top of rack switch 206 sends the VXLAN packet 5 to the router 205.

Step 57: The router 205 sends the VXLAN packet 5 to the top of rack switch 207 based on the outer destination IP address of the VXLAN packet 5.

Step 58: The top of rack switch 207 sends the VXLAN packet 5 to the physical network interface card 2043 based on the outer destination IP address of the VXLAN packet 5.

Step 59: The physical network interface card 2043 sends the VXLAN packet 5 to the VTEP device 304 based on the outer destination IP address of the VXLAN packet 5.

Step 60: The VTEP device 304 performs VXLAN decapsulation on the VXLAN packet 5, to obtain the layer 2 packet 2 and the VNI 1.

Step 61: The VTEP device 304 sends the layer 2 packet 2 and the VNI 1 to the virtual port 3.

Step 62: The virtual port 3 selects the virtual port 2 based on the VNI 1, and sends the layer 2 packet 2 to the virtual port 2, where the layer 2 packet 2 is sent to the virtual network interface card 2 through the virtual port 2.

Step 63: The layer 2 gateway 200 obtains the layer 2 packet 2 from the virtual network interface card 2, and modifies the layer 2 packet 2.

The layer 2 gateway 200 obtains the layer 2 packet 2, searches the local ARP entry of the layer 2 gateway 200 for PM 1 MAC corresponding to 192.168.0.4 based on the destination IP address 192.168.0.4 of the layer 2 packet 2, modifies the destination MAC address of the layer 2 packet 2 to PM 1 MAC, and modifies the source MAC address to L2 MAC 1.

The correspondence between 192.168.0.4 and PM 1 MAC is recorded in the local ARP entry of the layer 2 gateway 200 in step 12.

A quadruplet of the modified layer 2 packet 2 is as follows:
Source IP: 192.168.0.2;
Destination IP: 192.168.0.4;
Source MAC: L2 MAC 1; and
Destination MAC: PM 1 MAC.

Step 64: The layer 2 gateway 200 sends the modified layer 2 packet 2 to the virtual port 1 by using the virtual network interface card 1, and the virtual port 1 sends the modified layer 2 packet 2 to the virtual port 3.

Step 65: The virtual port 3 sends the layer 2 packet 2 and the VNI 0 to the VTEP device 304.

In this step, the virtual port 3 receives the layer 2 packet 2 from the virtual port 1, and determines the VNI 0 based on the virtual port 1.

Step 66: The VTEP device 304 determines the VTEP IP 3 (the VTEP IP address of the VTEP device 301) based on the VNI 0, and constructs a VXLAN packet 6, where an inner packet of the VXLAN packet 6 is the layer 2 packet 2, a VXLAN header of the VXLAN packet 6 carries the VNI 0, an outer destination IP address is the VTEP IP 3, and an outer source IP address is the VTEP IP 2.

An inner quadruplet and an outer quadruplet of the VXLAN packet 6 are as follows:
Outer quadruplet:
Source IP: VTEP IP 2;
Destination IP: VTEP IP 3;
Source MAC: VTEP MAC 2; and
Destination MAC: Next-hop MAC; and
Inner quadruplet:
   Source IP: 192.168.0.2;
   Destination IP: 192.168.0.4;
   Source MAC: L2 MAC 1; and
   Destination MAC: PM 1 MAC.

Step 67: The VTEP device 304 sends the VXLAN packet 6 to the physical network interface card 2043.

Step 68: The physical network interface card 2043 sends the VXLAN packet 6 to the top of rack switch 207.

Step 69: The top of rack switch 207 sends the VXLAN packet 6 to the router 205.

Step 70: The router 205 sends the VXLAN packet 6 to the VPN gateway 303 based on the outer destination IP address of the VXLAN packet 6.

Step 71: The VPN gateway 303 sends a VPN packet 4 to the internet 30.

After receiving the VXLAN packet 6, the VPN gateway 302 sets the VXLAN packet 6 in a data part of the VPN packet 4. A source IP address of a VPN header of the VPN packet 4 is the public IP 1, and a destination IP address is the public IP 2.

Step 72: The routing device of the internet 30 forwards the VPN packet 4 to the VPN gateway 302 based on the destination IP address of the VPN packet 4.

Step 73: The VPN gateway 302 removes the VPN header of the VPN packet 4, obtains the VXLAN packet 6 from the data part of the VPN packet 4, and sends the VXLAN packet 6 to the VTEP device 301 based on the outer destination IP address of the VXLAN packet 6.

Step 74: The VTEP device 301 receives the VXLAN packet 6, and decapsulates the VXLAN packet 6, to obtain the layer 2 packet 2 and the VNI 0, select the subnet 1 based on the VNI 0, and send the layer 2 packet 2 to the PM 1 in the subnet 1.

In this step, the PM 1 receives the layer 2 packet 2, obtains the IP packet 2 from the data part of the layer 2 packet 2, and obtains the reply information 1 from the data part of the IP packet 2. In this case, request information sent by the PM 1 to the VM 1 is replied to by the VM 1, and communication between the PM 1 and the VM 1 is completed.

Further, in this step, the PM 1 may record the source MAC address (L2 MAC 1) of the layer 2 packet 2 and the source IP address (192.168.0.2) of the layer 2 packet 2 in the local ARP entry.

In conclusion, the PM 1 is unaware of the layer 2 gateway 200 and a layer 2 communication tunnel. The PM 1 considers that the VM 1 and the PM 1 are in a same local area network (192.168.0.0/24). Therefore, in this embodiment of the present invention, the PM 1 at an on-premises data center 10 and the VM 1 at an on-cloud data center 20 may be disposed in a same local area network.

FIG. 12A and FIG. 12B show a method in which a VM 1 actively sends an ARP request packet to a PM 1. In this embodiment, the VM 1 actively communicates with the PM 1, and the VM 1 records only a private address 192.168.0.4 of the PM 1. However, a local ARP entry of the VM 1 does not record a MAC address corresponding to 192.168.0.4. In this case, the VM 1 sends the ARP request packet to query the MAC address corresponding to 192.168.0.4. The method includes the following steps.

Step 1': The VM 1 sends an ARP request packet 2 to a virtual port 5.

A quadruplet of the ARP request packet 2 is as follows:
Source IP: 192.168.0.2;
Destination IP: 192.168.0.4;
Source MAC: VM 1 MAC; and
Destination MAC: FFFF FFFF FFFF.

Step 2': The virtual port 5 sends the ARP request packet 2 to a logical bridge 2034.

Step 3': The logical bridge 2034 sends the ARP reply packet 2 to the virtual port 5.

A quadruplet of an ARP reply packet 2 is as follows:
Source IP: 192.168.0.4;
Destination IP: 192.168.0.2;
Source MAC: L2 MAC 1; and
Destination MAC: VM 1 MAC.

In this step, after receiving a packet sent by a virtual machine connected to a device manager 2031, when the logical bridge 2034 determines that a destination MAC address of the packet is FFFF FFFF FFFF, the logical bridge 2034 determines whether the received packet is an ARP request packet, and further determines whether a destination IP address of the ARP request packet is an occupied private address (for example, 192.168.0.2 or 192.168.0.3) in a subnet 1.

If the destination IP address of the ARP request packet is not an occupied private address in the subnet 1, it indicates that the private address is a private address of an on-premises data center 10. The logical bridge 2034 intercepts the ARP request packet, and sends an ARP reply packet to the virtual machine. A source MAC address of the ARP reply packet is L2 MAC 2, and is used to notify the VM 1 that a MAC address corresponding to 192.168.0.4 is L2 MAC 2.

If the destination IP address of the ARP request packet is an occupied private address in the subnet 1, it indicates that the private address is a private address of the subnet 1, and the logical bridge 2034 broadcasts the ARP request packet in the subnet 1.

Step 4': The virtual port 5 sends the ARP reply packet 2 to the VM 1.

The VM 1 determines, based on a source MAC address of the ARP reply packet 2, that the MAC address corresponding to 192.168.0.4 is L2 MAC 2.

The VM 1 records a correspondence between 192.168.0.4 and L2 MAC 1 in the local ARP entry of the VM 1.

After obtaining L2 MAC 1, the VM 1 constructs a layer 2 packet 3 and sends the layer 2 packet 3 to the virtual port 5. A quadruplet of the layer 2 packet 3 is the same as that of the foregoing layer 2 packet 2, and a difference lies in that a data part of the layer 2 packet 3 carries an IP packet 3, and a data part of the IP packet 3 carries request information 2 rather than reply information 1. However, a data flow direction of the layer 2 packet 3 in a hybrid cloud communication system is completely the same as that of the layer 2 packet 2. Therefore, details are not described again.

It should be noted that, slightly different from the foregoing descriptions, when the layer 2 packet 3 arrives at a layer 2 gateway 200, if a local ARP entry of the layer 2 gateway 200 does not record a MAC address corresponding to a destination IP address (192.168.0.4) of the layer 2 packet 2, the layer 2 gateway 200 needs to send an ARP request packet to a subnet 2 by using a virtual network interface card 1 to obtain the MAC address corresponding to 192.168.0.4.

Further, after the layer 2 packet 3 sent by the VM 1 to the PM 1 arrives at the PM 1, a quadruplet of a layer 2 packet 4 that is constructed by the PM 1 and that is used to reply to the VM 1 is the same as that of the foregoing layer 2 packet 1. A difference lies in that the data part of the layer 2 packet 4 carries an IP packet 4, and a data part of the IP packet 4 carries reply information 2 rather that request information 1. However, a data flow direction of the layer 2 packet 4 in the hybrid cloud communication system is completely the same as that of the layer 2 packet 1. Therefore, details are not described again.

In another embodiment of the present invention, after determining that the received packet is an ARP request packet, the logical bridge 2034 may send the ARP request packet to the layer 2 gateway 200, and the layer 2 gateway 200 intercepts the ARP request packet and returns the ARP reply packet to the VM 1.

It should be noted that the logical bridge 2034 intercepts the ARP request packet, so that the ARP request packet may be prevented from being broadcast at an on-cloud data center 20.

In conclusion, in the embodiments shown in FIG. 9A and FIG. 9B to FIG. 12A and FIG. 12B, a process in which the VM 1 and the PM 1 perform layer 2 interworking by using the layer 2 gateway 200 is described in detail.

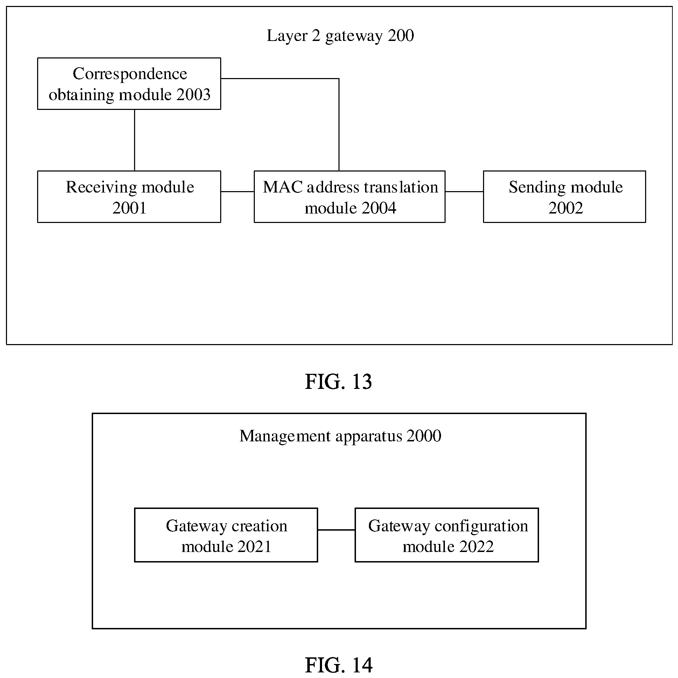

FIG. 13 is a diagram of an apparatus structure of a layer 2 gateway in a hybrid cloud environment according to an embodiment of the present invention. As shown in FIG. 13, a layer 2 gateway 200 includes a receiving module 2001, a sending module 2002, a correspondence obtaining module 2003, and a MAC address translation module 2004. The receiving module 2001 is configured to perform an action of receiving a packet in the foregoing embodiments. The sending module 2002 is configured to perform an action of sending a packet in the foregoing embodiments. The correspondence obtaining module 2003 is configured to: perform an action of learning of and recording a correspondence between a private address of a virtual machine and a MAC address of the virtual machine in the foregoing embodiments, and perform an action of learning of and recording a correspondence between a private address of a physical machine and a MAC address of the physical machine in the foregoing embodiments. The MAC address translation module 2004 is configured to perform an action of modifying a packet in the foregoing embodiments.

FIG. 14 is a diagram of an apparatus structure of a management apparatus in a hybrid cloud environment according to an embodiment of the present invention. As shown in FIG. 14, a management apparatus 2000 includes a gateway creation module 2021 and a gateway configuration module 2022. The gateway creation module 2021 is configured to perform a method for creating a layer 2 gateway 200 in the foregoing embodiments. The gateway configuration module 2022 is configured to perform the method for configuring a layer 2 gateway 200 in the foregoing embodiments. The management apparatus 2000 may serve as a functional module of the control platform 201, and is disposed on the control platform 201.

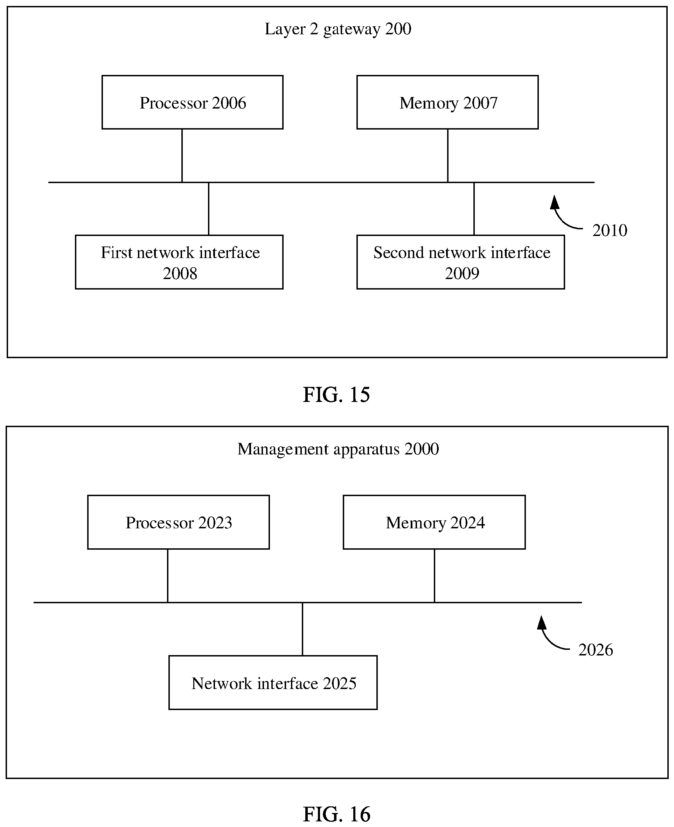

It should be noted that the layer 2 gateway 200 in FIG. 9A and FIG. 9B to FIG. 12A and FIG. 12B is specifically implemented by software, a virtual machine, or a container that runs on a network node 204. However, this embodiment of the present invention is not limited thereto. The layer 2 gateway 200 may alternatively be implemented by using a general-purpose computing device. For example, FIG. 15 is a diagram of another apparatus structure of a layer 2 gateway according to an embodiment of the present invention. As shown in FIG. 15, the layer 2 gateway 200 includes a processor 2006, a memory 2007, a first network interface 2008, a second network interface 2009, and a bus 2010. The memory 2007 stores program instructions, and the processor 2006 executes the program instructions to implement related functions of the layer 2 gateway 200 in the foregoing embodiments.

It should be noted that, when the layer 2 gateway 200 is a general-purpose computing device, a virtual switch 2042 and a VTEP device 304 that are connected to the layer 2 gateway 200 in FIG. 9A and FIG. 9B to FIG. 12A and FIG. 12B may be implemented by using a VXLAN switch that has a switch function and a VXLAN encapsulation and decapsulation function.

For example, the layer 2 gateway 200 may be a general-purpose computing device that implements network functions virtualization (Network Functions Virtualization, NFV).

FIG. 16 is a diagram of an apparatus structure of a management apparatus in a hybrid cloud environment according to an embodiment of the present invention. As shown in FIG. 15, the management apparatus includes a processor 2023, a memory 2024, a network interface 2025, and a bus 2026. The memory 2024 stores program instructions, and the processor 2023 executes the program instructions to implement the management method in the hybrid cloud environment in the foregoing embodiments.

An embodiment of the present invention further provides a computer program product for implementing a function of the foregoing layer 2 gateway, and a computer program product for implementing a function of the foregoing control platform. In addition, the foregoing computer program product includes a computer-readable storage medium that stores program code, and instructions included in the program code is used to perform the method procedure described in any one of the foregoing method embodiments. A person of ordinary skill in the art may understand that, the foregoing storage medium includes various non-transitory (non-transitory) machine-readable media that can store program code, such as a USB flash drive, a removable hard disk, a magnetic disk, an optical disc, a random access memory (Random-Access Memory, RAM), a solid-state drive (Solid State Disk, SSD), or a non-volatile memory (non-volatile memory).

It should be noted that embodiments provided in this application are merely examples. A person skilled in the art may clearly know that, for convenience and conciseness of description, in the foregoing embodiments, the embodiments emphasize different aspects, and for a part not described in detail in one embodiment, refer to related descriptions in another embodiment. Features disclosed in embodiments, claims, and accompanying drawings of the present invention may exist independently or exist in a combination. Features described in a hardware form in embodiments of the present invention may be executed by software, and vice versa. This is not limited herein.

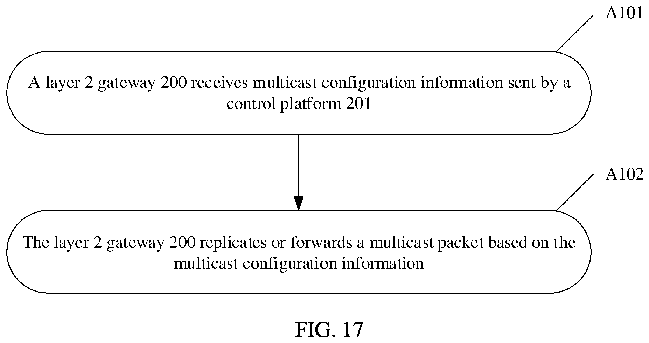

In view of the foregoing technical problem, an embodiment of the present invention provides a multicast method in a hybrid cloud environment. FIG. 17 is a flowchart of a multicast method in a hybrid cloud environment according to an embodiment of the present invention. The method includes the following steps.

Step A101: A control platform 201 sends multicast configuration information to a layer 2 gateway 200.

Optionally, in an embodiment provided in this application, the multicast configuration information includes static multicast member configuration information or dynamic multicast member learning information. Optionally, in an embodiment provided in this application, an IGMP protocol is used to support dynamic multicast member learning.

Step A102: The layer 2 gateway 200 replicates or forwards a multicast packet based on the multicast configuration information.

Specifically, the layer 2 gateway 200 replicates or forwards the multicast packet based on multicast group information in the multicast packet and a correspondence between multicast group information in the multicast configuration information and a multicast group member.

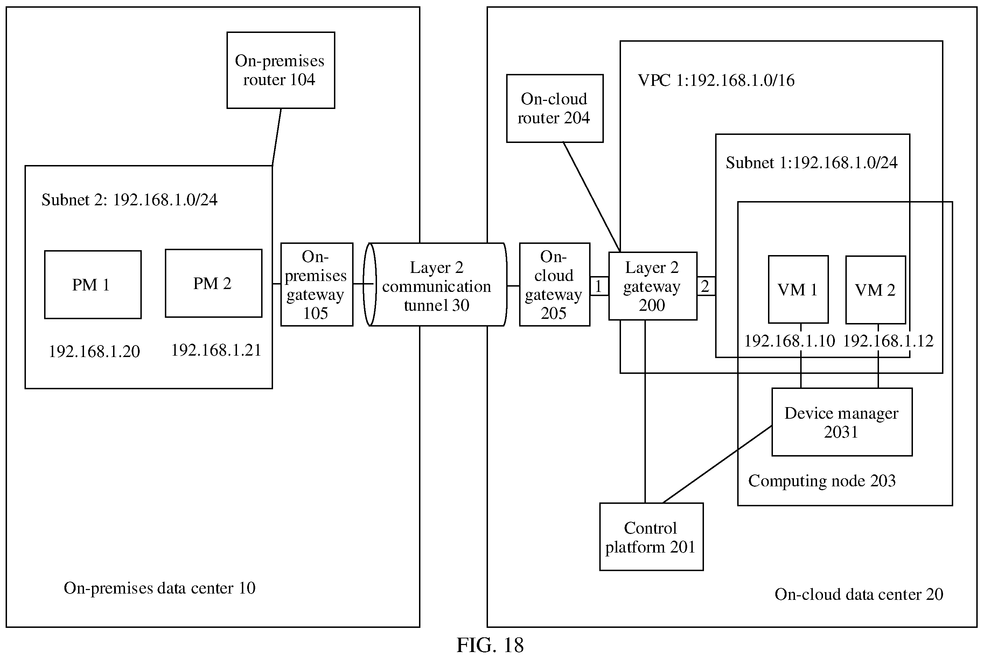

FIG. 18 is a diagram of a system structure of a hybrid cloud environment according to an embodiment of the present invention. As shown in the figure, compared with the foregoing embodiment, in this embodiment, an on-premises data center 10 includes physical machines that are a PM 1 and a PM 2 disposed in a subnet 2 (192.168.0.0/24), a private address of the PM 1 is 192.168.0.4, a private address of the PM 2 is 192.168.0.5, and the private addresses belong to a private address segment of the subnet 2; and an on-cloud data center 20 includes virtual machines that are a VM 1 and a VM 2 disposed in a subnet 1 (192.168.0.0/24), a private address of the VM 1 is 192.168.0.2, a private address of the VM 2 is 192.168.0.3, and the private addresses belong to a private address segment of the subnet 1. The subnet 1 and the subnet 2 have a same private address segment, and private addresses of physical machines in the subnet 2 such as the PM 1 and the PM 2 are different from private addresses 192.168.0.2 of virtual machines in the subnet 1 such as the VM 1 and the VM 2. A network interface card 1 of a layer 2 gateway 200 is connected to a layer 2 communication tunnel 30, so that the network interface card 1 is connected to the subnet 2, and a network interface card 2 is connected to the subnet 1.

Further, in this embodiment of this application, a control platform 201 sends multicast configuration information to the layer 2 gateway 200. Optionally, in an embodiment provided in this application, the multicast configuration information includes static multicast member configuration information or dynamic multicast member learning information. Optionally, in an embodiment provided in this application, an IGMP protocol is used to perform dynamic multicast member learning.

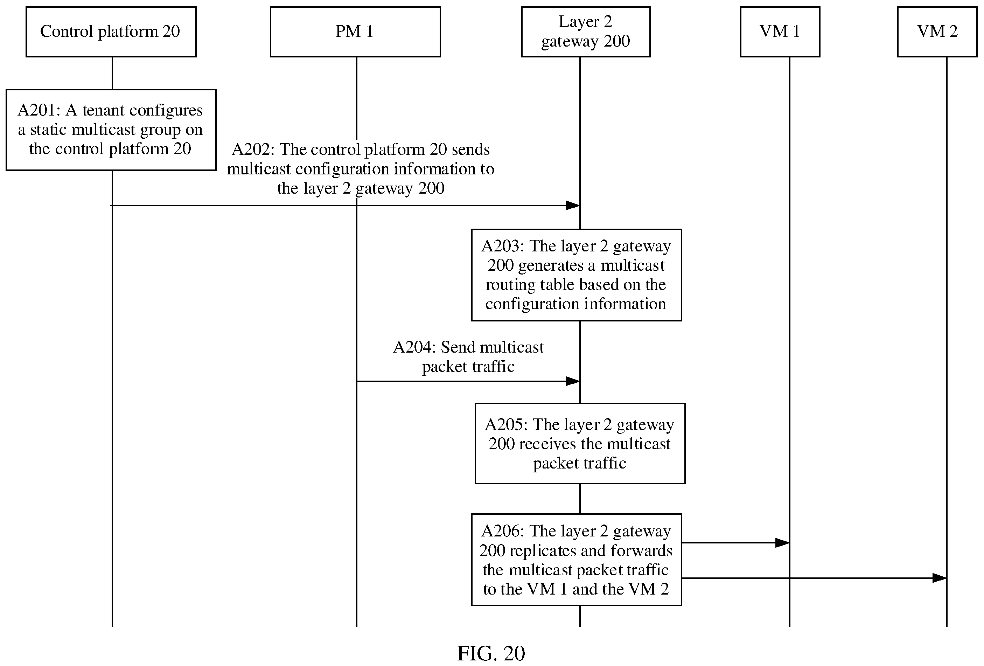

With reference to FIG. 20 to FIG. 23A to FIG. 23C, the following describes a multicast communication process between the subnet 1 and the subnet 2 based on the hybrid cloud environment shown in FIG. 18.

For ease of description, in the following, a MAC address of the PM 1 is recorded as PM 1 MAC, a MAC address of the VM 1 is recorded as VM 1 MAC, a MAC address 1 of the layer 2 gateway 200 is recorded as L2 MAC 1, and a MAC address 2 of the layer 2 gateway 200 is recorded as L2 MAC 2.

FIG. 20 is a data exchange diagram of a communication method in a hybrid cloud environment according to an embodiment of the present invention. In this embodiment, a PM 1 at an on-premises data center 10 serves as a multicast source, and performs multicast communication with a VM 1 and a VM 2 at an on-cloud data center 20. Optionally, in an embodiment provided in this application, a static multicast configuration method is used, and group members of a static multicast group include the VM 1 and the VM 2 at the on-cloud data center 20.

Specifically, the multicast communication method in this embodiment of this application includes the following steps.

Step A201: A tenant configures the static multicast group on a control platform 20.

Specifically, the tenant configures the static multicast group through the Internet by using a client and the control center 20. A configuration manner may be entering console instructions by using an operation in an interaction interface or by using an API. This is not limited in this embodiment of this application. In an embodiment provided in this application, an entry that may be configured by the tenant in the static multicast group includes one or any combination of an enabled IP multicast routing function, a multicast group IP address, a multicast group MAC address, a multicast group member IP address, a multicast group member MAC address, and a virtual instance identifier of a multicast group member.

Step A202: The control platform 201 sends configuration information of the static multicast group to a layer 2 gateway 200.

Step A203: The layer 2 gateway 200 generates a multicast entry based on the multicast configuration information.

Specifically, the multicast entry includes a correspondence between a multicast group and a multicast group member, and indicates a transmission path of a multicast packet. In an embodiment provided in this application, information recorded in the multicast entry includes one or any combination of a multicast group IP address, a multicast group MAC address, a multicast group member IP address, a multicast group member MAC address, and a virtual instance identifier of a multicast group member.

Optionally, in step A201 to step A203, the tenant may modify or delete a static multicast configuration, the control platform 20 sends modification or deletion information to the layer 2 gateway 200, and the layer 2 gateway 200 updates, based on the information, a multicast entry recorded by the layer 2 gateway 200.

Step A204: The PM 1 sends multicast packet traffic, where the multicast packet traffic is sent to the layer 2 gateway 200 through a layer 2 communication tunnel 30.

In this step, the PM 1 actively performs multicast communication with the on-cloud data center, and sends traffic of a multicast packet 1 to the layer 2 gateway 200 through the layer 2 communication tunnel 30. In this case, the PM 1 records a multicast group private address 224.0.0.3, a source IP address of the multicast packet 1 is a private address 192.168.1.20 of the PM 1, a source MAC address is PM 1 MAC, a destination IP address is the multicast group private address 224.0.0.3, and a destination MAC address is a multicast group MAC address. In an embodiment provided in this application, after passing through a VTEP device, an outer packet header is added to the multicast packet 1 to form a multicast packet 2. In the outer packet, a source IP address is a private address 200.51.3.30 of an on-premises gateway 105 connected to the layer 2 communication tunnel 30, a source MAC address is a MAC address of the on-premises gateway 105 connected to the layer 2 communication tunnel 30, a destination IP address is a private address 172.16.2.200 of an on-cloud gateway 205 connected to the layer 2 communication tunnel 30, and a destination MAC address is a MAC address of the on-cloud gateway 205 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

Step A205: The layer 2 gateway 200 receives the multicast packet traffic.

Specifically, the layer 2 gateway 200 receives the multicast packet traffic through the layer 2 communication tunnel 30, and queries the multicast group member based on the multicast entry.

Step A206: The layer 2 gateway 200 replicates and forwards the multicast packet traffic to the VM 1 and the VM 2.

Specifically, the layer 2 gateway 200 finds, in the multicast entry based on an inner destination IP address (a multicast group private address 192.168.0.4) in the multicast packet traffic and the multicast group MAC address, a correspondence between the IP address and the multicast group members that are the VM 1 and the VM 2, parses the multicast packet traffic, and sends the parsed multicast packet traffic to the VM 1 and the VM 2.

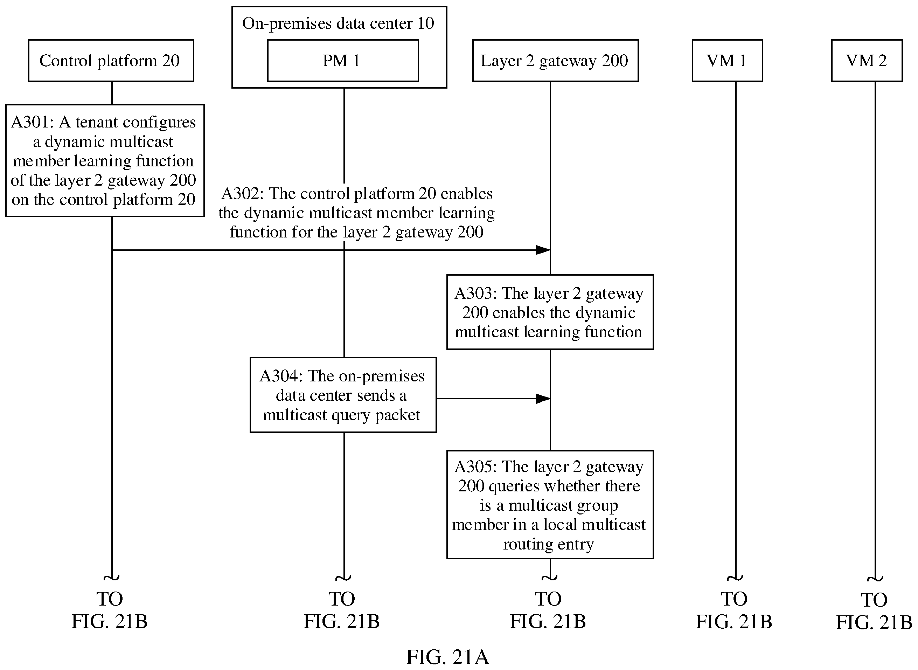

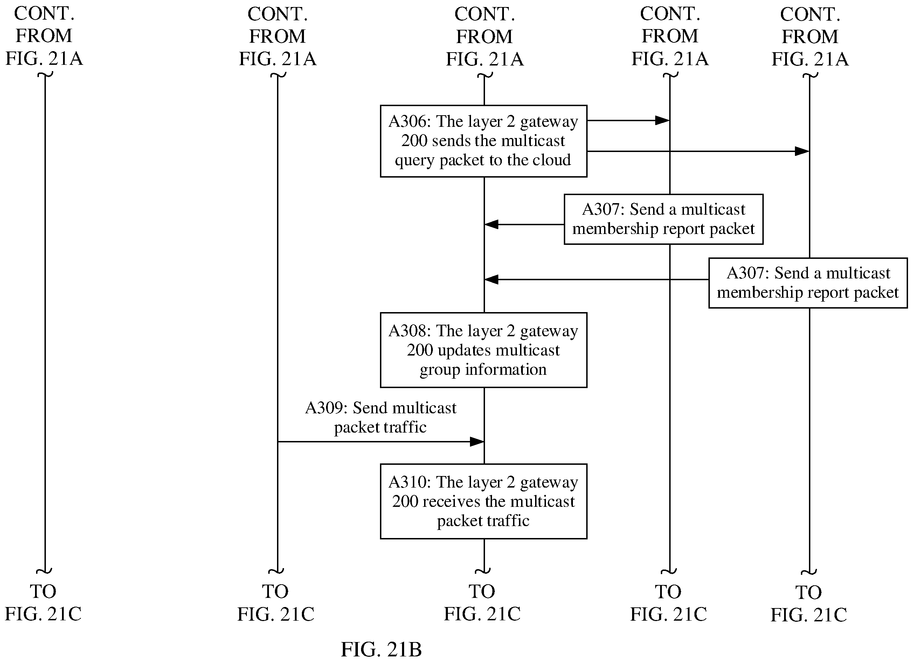

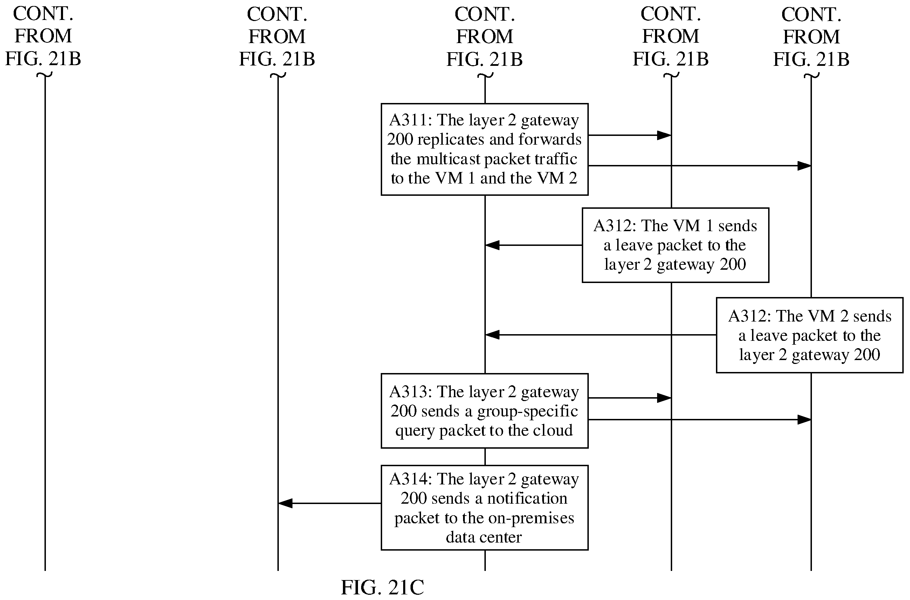

FIG. 21A to FIG. 21C are a data exchange diagram of a communication method in a hybrid cloud environment according to an embodiment of the present invention. In this embodiment, a PM 1 at an on-premises data center 10 serves as a multicast source, and performs multicast communication with a VM 1 and a VM 2 at an on-cloud data center 20. Optionally, in an embodiment provided in this application, a dynamic multicast configuration method is used.

Specifically, the multicast communication method in this embodiment of this application includes the following steps.

A301: A tenant enables a dynamic multicast member learning function for a layer 2 gateway 200 by using a control platform 20.

Specifically, the tenant configures the dynamic multicast member learning function through the Internet by using a client and the control center 20. A configuration manner may be entering console instructions by using an operation in an interaction interface or by using an API. This is not limited in this embodiment of this application. In an embodiment provided in this application, dynamic multicast member learning capability is supported by protocols such as IGMP, IGMP proxy, and IGMP snooping.

A302: The control platform 20 enables the dynamic multicast member learning function for the layer 2 gateway 200.

A303: The layer 2 gateway 200 enables the dynamic multicast learning function.

A304: The on-premises data center 10 sends a multicast query packet to the on-cloud data center 20.

Specifically, a router 205 of the on-premises data center sends a membership query packet (IGMP Query packet) to the on-cloud data center. The IGMP Query packet is sent to the layer 2 gateway 200 through a layer 2 communication tunnel 30, and is used to learn of a specific multicast group including a member in all multicast groups. In an embodiment of this application, a source IP address of the IGMP Query packet is 0.0.0.0, a destination IP address is a shared network segment multicast address 224.0.0.1, a source MAC address is MAC of an on-premises router 104, and a destination MAC address is a shared network segment MAC 01:00:5e:00:00:01. An outer packet header is added to the IGMP Query packet when the IGMP Query packet is sent to the layer 2 communication tunnel 30 through an on-premises gateway 105 connected to the layer 2 communication tunnel 30, a source IP address of the outer packet header is a private address 200.51.3.30 of the on-premises gateway 105 connected to the layer 2 communication tunnel 30, a destination IP address is a private address 172.168.2.200 of an on-cloud gateway 205 connected to the layer 2 communication tunnel 30, a source MAC address is a MAC address of the on-premises gateway 105 connected to the layer 2 communication tunnel 30, and the destination MAC address is a MAC address of the on-cloud gateway 205 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A305: The layer 2 gateway 200 queries whether there is a multicast group member in a local multicast entry.

Specifically, the layer 2 gateway 200 queries, based on multicast group information in the multicast query packet, whether a multicast member corresponding to the multicast group exists in a local multicast entry. If no multicast member corresponding to the multicast group exists in the local multicast entry, A306 is performed; or if a multicast member corresponding to the multicast group exists in the local multicast entry, A309 is directly performed.

A306: The layer 2 gateway 200 sends the multicast query packet to the on-cloud data center 20.

The layer 2 gateway sends the membership query packet (IGMP Query) to all virtual machines including the VM 1 and the VM 2 on a network segment of a subnet 1 at the on-cloud data center 20.

A307: The VM 1 and the VM 2 send a multicast membership report packet to the layer 2 gateway 200.

Specifically, the VM 1 and the VM 2 send the multicast membership report packet (IGMP Report packet) to the layer 2 gateway 200, to announce that the VM 1 and the VM 2 are multicast group members. In an embodiment of this application, a source IP address of the IGMP Report packet is an IP address 192.168.1.200 of a network interface card 2 that is of the layer 2 gateway 200 and that is connected to the subnet 1, a source MAC address is a MAC address of the layer 2 gateway, a destination IP address is a multicast group IP address 224.0.0.3, and a destination MAC address is a multicast group MAC address 01:00:5e:00:00:03.

A308: The layer 2 gateway 200 updates the local multicast group information.

Specifically, the layer 2 gateway 200 refreshes the local multicast entry based on the received membership report packet (IGMP Report packet), and sends the membership report packet to the router 104 of the on-premises data center 10 through the layer 2 communication tunnel. In an embodiment provided in this application, the layer 2 gateway 200 subsequently sends the IGMP Report packet to the on-premises data center 10 through the layer 2 communication tunnel 30. Specifically, when the IGMP Report packet is sent to the layer 2 communication tunnel 30 through the on-cloud gateway 205 connected to the layer 2 communication tunnel 30, an outer packet header is added to the packet, a source IP address of the outer packet is an IP address 172.16.2.200 of a network interface card 1 that is of the layer 2 gateway 200 and that is connected to the layer 2 communication tunnel 30, a source MAC address is a MAC address of the on-cloud gateway 205 connected to the layer 2 communication tunnel 30, a destination IP address is an IP address 200.51.3.0 of the on-premises gateway 105 connected to the layer 2 communication tunnel 30, and a destination MAC address is a MAC address of the on-premises gateway 105 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A309: The PM 1 sends multicast packet traffic to an on-cloud multicast group member.

Specifically, the multicast packet traffic sent by the PM 1 is sent to the layer 2 gateway 200 through the layer 2 network tunnel 30. In an embodiment provided in this application, the PM 1 records a multicast group private address 224.0.0.3, a source IP address of a multicast packet is a private address 192.168.1.20 of the on-premises multicast source PM 1, a source MAC address is MAC of the on-premises router 104, a destination IP address is a multicast group private address 224.0.0.3, and a destination MAC address is a multicast group MAC address 01:00:5e. 00:00:03. An outer packet header is added to the multicast packet after the multicast packet is sent to the layer 2 communication tunnel 30 through the on-premises gateway 105 connected to the layer 2 communication tunnel 30, a source IP address of the outer packet is a private address 200.51.3.30 of the on-premises gateway 105 connected to the layer 2 communication tunnel 30, a source MAC address is a MAC address of the on-premises gateway 105 connected to the layer 2 communication tunnel 30, a destination IP address is a private address 172.168.2.200 of the on-cloud gateway 205 connected to the layer 2 communication tunnel 30, and a destination MAC address is a MAC address of the on-cloud gateway 205 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A310: The layer 2 gateway 200 receives the multicast packet traffic.

Specifically, the layer 2 gateway 200 receives the multicast packet traffic, and parses out the multicast group information included in the multicast packet traffic.

A311: The layer 2 gateway 200 replicates and forwards the multicast packet traffic to the VM 1 and the VM 2.

Specifically, the layer 2 gateway 200 finds, in the multicast entry based on an inner destination IP address (a multicast group private address 244.0.0.3) in the multicast packet traffic and the multicast group MAC address, a correspondence between the address and the multicast group members that are the VM 1 and the VM 2, parses the multicast packet traffic, and sends the parsed multicast packet traffic to the VM 1 and the VM 2.

A312: The VM 1 and the VM 2 send a leave packet to the layer 2 gateway 200.

The multicast group members that are the VM 1 and the VM 2 send the leave packet (IGMP Leave packet) to a network. A destination IP address of the packet is 224.0.0.2.

A313: The layer 2 gateway 200 sends a group-specific query packet to the cloud.

After receiving the leave packet, the layer 2 gateway 200 sends the group-specific query packet (IGMP Group-Specific Query packet) to the multicast group, to determine whether another group member exists in the multicast group. If no member replies within a period of time, the layer 2 gateway 200 considers that there is no member of the multicast group on the network segment and a corresponding IGMP entry is deleted.

A314: The layer 2 gateway 200 sends a notification packet to the on-premises data center.

The layer 2 gateway determines that there is no member of the multicast group on the network segment at the on-cloud data center, and sends a packet to the router 104 at the on-premises data center 10. The packet is used to notify the router 104 that there is no another member of the multicast group at the on-cloud data center 20, and multicast traffic of the group is no longer forwarded to the network segment.

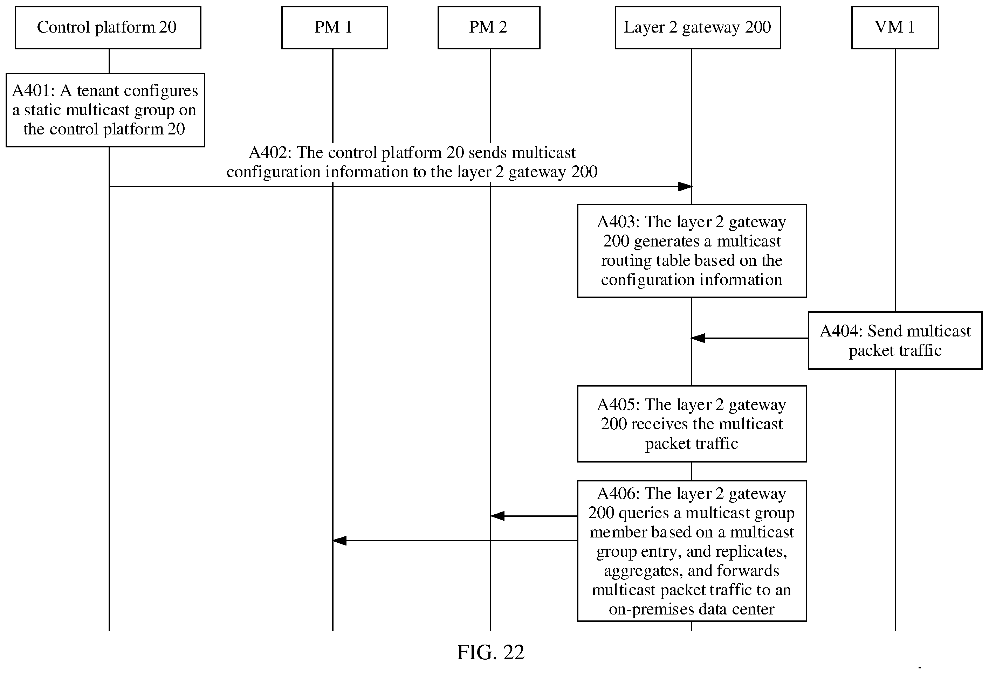

FIG. 22 is a data exchange diagram of a communication method in a hybrid cloud environment according to an embodiment of the present invention. In this embodiment, a VM 1 at an on-cloud data center 20 serves as a multicast source, and performs multicast communication with a PM 1 and a PM 2 at an on-premises data center 10. Optionally, in an embodiment provided in this application, a static multicast configuration method is used, and group members of a static multicast group include the PM 1 and the PM 2 at the on-premises data center 10.

Specifically, the multicast communication method in this embodiment of this application includes the following steps.

Step A401: A tenant configures the static multicast group at a control center 20.

Specifically, the tenant configures the static multicast group through the Internet by using a client and the control center 20. A configuration manner may be entering console instructions by using an operation in an interaction interface or by using an API. This is not limited in this embodiment of this application. In an embodiment provided in this application, an entry that may be configured by the tenant in the static multicast group includes one or any combination of an enabled IP multicast routing function, a multicast group IP address, a multicast group MAC address, a multicast group member IP address, a multicast group member MAC address, and a virtual instance identifier of a multicast group member.

Step A402: The control platform 20 sends configuration information of the static multicast group to a layer 2 gateway 200.

Step A403: The layer 2 gateway 200 generates a multicast entry based on the multicast configuration information.

Specifically, the multicast entry indicates a transmission path of a multicast packet. In an embodiment provided in this application, information recorded in the multicast entry includes one or any combination of a multicast group IP address, a multicast group MAC address, a multicast group member IP address, a multicast group member MAC address, and a virtual instance identifier of a multicast group member. Optionally, in step A401 to step A403, the tenant may modify or delete a static multicast group configuration, the control platform 20 sends modification or deletion information to the layer 2 gateway 200, and the layer 2 gateway 200 updates, based on the information, a multicast entry recorded by the layer 2 gateway 200.

Step A404: The VM 1 sends multicast packet traffic.

Specifically, the VM 1 sends the multicast packet traffic to the layer 2 gateway 200. In this step, the VM 1 actively performs multicast communication with the on-premises data center, and sends the multicast packet traffic to the layer 2 gateway 200. In this case, the VM 1 records a multicast group private address 224.0.0.3, a source IP address of the multicast packet is a private address 192.168.1.10 of the VM 1, a source MAC address is VM 1 MAC, a destination IP address is the multicast group private address 224.0.0.3, and a destination MAC address is a multicast group MAC address.

Step A405: The layer 2 gateway 200 receives the multicast packet traffic.

Specifically, the layer 2 gateway 200 receives the multicast packet traffic, and queries a correspondence between the multicast group and an on-premises network segment in the multicast entry based on multicast group information in the multicast packet traffic.

Step A406: The layer 2 gateway 200 queries a multicast group member based on the multicast entry, and replicates, aggregates, and forwards the multicast packet traffic to the on-premises data center.

Specifically, the layer 2 gateway 200 finds, in the multicast entry based on an inner destination IP address (a multicast group private address 192.168.0.4) in the multicast packet traffic and a multicast group MAC address, a correspondence between the addresses and an on-premises network segment including the multicast group members that are the PM 1 and the PM 2, parses the multicast packet traffic, and sends the parsed multicast packet traffic to the on-premises data center. In an embodiment provided in this application, after an outer packet header is added to the multicast packet after the multicast packet passes through an on-cloud gateway 205 connected to the layer 2 communication tunnel 30, in the outer packet, a source IP address is a private address 172.168.2.200 of the on-cloud gateway 205 connected to the layer 2 communication tunnel 30, a source MAC address is a MAC address of the on-cloud gateway 205 connected to the layer 2 communication tunnel 30, a destination IP address is a private address 200.51.3.30 of the on-premises gateway 105 connected to the layer 2 communication tunnel 30, and a destination MAC address is a MAC address of the on-premises gateway 105 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

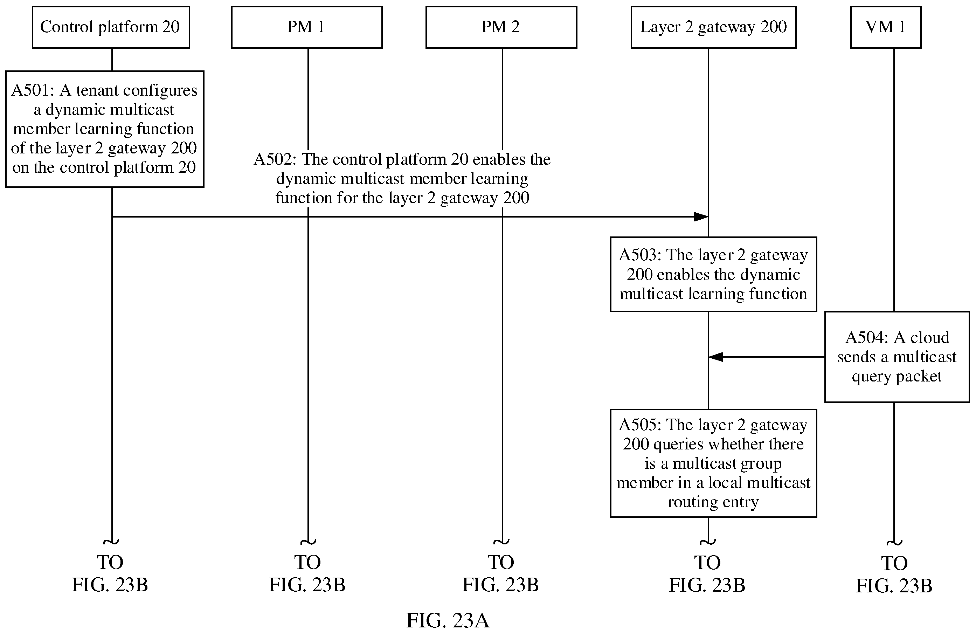

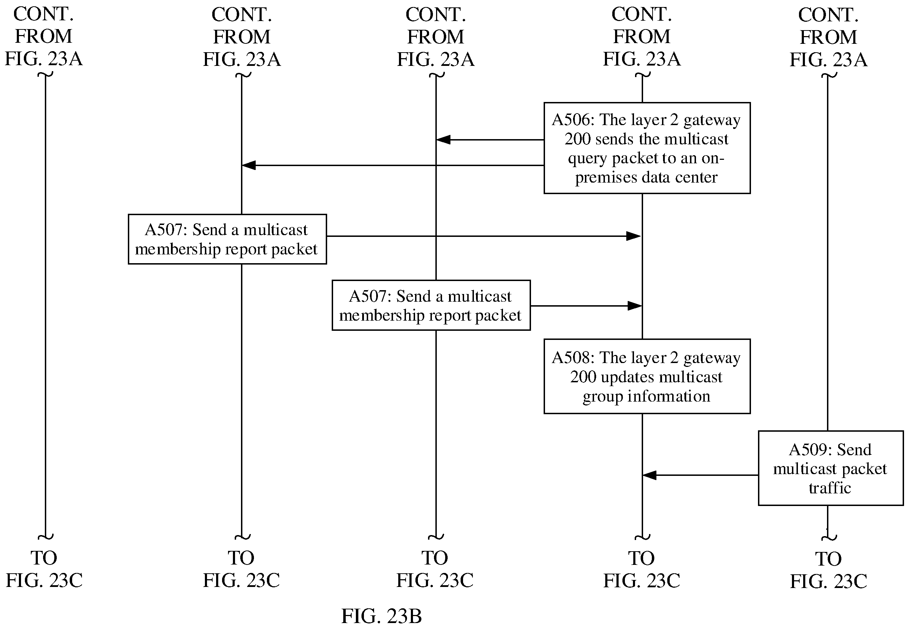

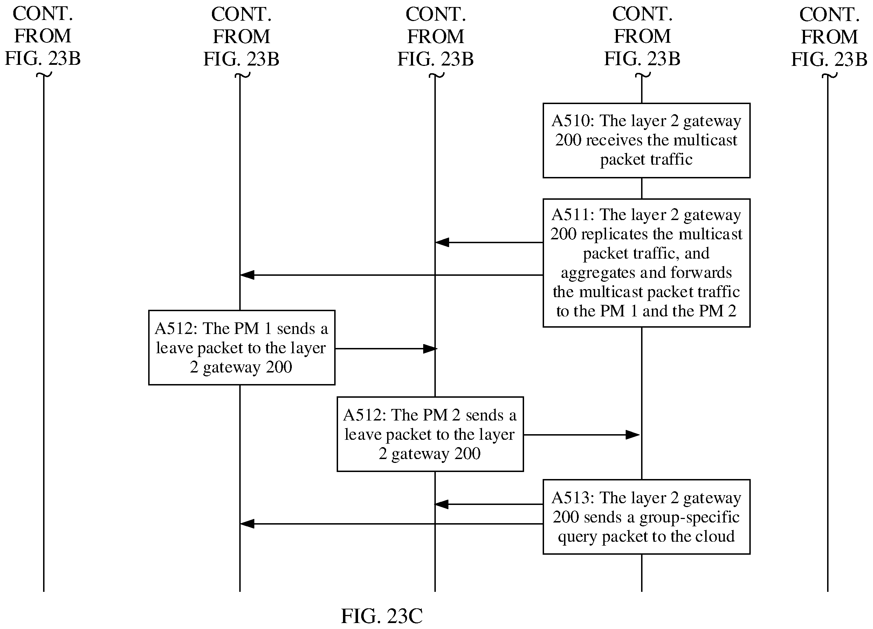

FIG. 23A to FIG. 23C are a data exchange diagram of a communication method in a hybrid cloud environment according to an embodiment of the present invention. In this embodiment, a VM 1 at an on-cloud data center 20 serves as a multicast source, and performs multicast communication with a PM 1 and a PM 2 at an on-premises data center 10. Optionally, in an embodiment provided in this application, a dynamic multicast configuration method is used.

Specifically, the multicast communication method in this embodiment of this application includes the following steps.

A501: A tenant enables a dynamic multicast member learning function for a layer 2 gateway 200 by using a control platform 20.

Specifically, the tenant configures the dynamic multicast member learning function through the Internet by using a client and the control center 20. A configuration manner may be entering console instructions by using an operation in an interaction interface or by using an API. This is not limited in this embodiment of this application. In an embodiment provided in this application, a dynamic multicast member learning capability and a proxy reply capability are supported by protocols such as IGMP, IGMP proxy, and IGMP snooping.

A502: The control platform 20 enables the dynamic multicast member learning function for the layer 2 gateway 200.

A503: The layer 2 gateway 200 enables the dynamic multicast learning function.

A504: An on-cloud router 204 sends a multicast query packet to the layer 2 gateway 200.

Specifically, the router 204 of the on-cloud data center sends a membership query packet (IGMP Query packet) to the on-cloud data center and the on-premises data center, to learn of a specific multicast group including a member, and the layer 2 gateway 200 receives the IGMP Query packet. In an embodiment of this application, a source IP address of the IGMP Query packet is 0.0.0.0, a destination IP address is a shared network segment multicast address 224.0.0.1, a source MAC address is MAC of the layer 2 gateway, and a destination MAC address is a shared network segment MAC 01:00:5e:00:00:01. An outer packet header is added to the IGMP packet after the IGMP packet is sent to the layer 2 communication tunnel 30 through the layer 2 gateway 200 and an on-cloud gateway 205 connected to a layer 2 communication tunnel 30. A source IP address of the outer packet header is an IP address 172.16.2.200 of the on-cloud gateway 205 connected to the layer 2 communication tunnel 30, a destination IP address is an IP address 200.51.3.30 of an on-premises gateway 105 connected to the layer 2 communication tunnel 30, a source MAC address is a MAC address of the on-cloud gateway 205 connected to the layer 2 communication tunnel 30, and a destination MAC address is a MAC address of the on-cloud gateway 205 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A505: The layer 2 gateway 200 queries whether there is a multicast group member in a local multicast entry.

Specifically, the layer 2 gateway 200 queries, based on multicast group information in the multicast query packet (IGMP Query packet), whether a multicast member corresponding to the multicast group exists in a local multicast entry. If no multicast member corresponding to the multicast group exists in the local multicast entry, A506 is performed; or if a multicast member corresponding to the multicast group exists in the local multicast entry, A509 is directly performed.

A506: The layer 2 gateway 200 sends the multicast query packet to the on-premises data center.

Specifically, the layer 2 gateway 200 sends the membership query packet (IGMP Query) to the on-premises data center 10 through the layer 2 communication tunnel 30. The packet may be sent to all hosts including the PM 1 and the PM 2 on a network segment of a subnet 2.

A507: The PM 1 and the PM 2 send a multicast membership report packet to the on-cloud data center 20.

Specifically, the PM 1 and the PM 2 send the multicast membership report packet (IGMP Report packet) to the on-cloud data center 20. The IGMP Report packet is sent to the layer 2 gateway 200 through the layer 2 communication tunnel 30 and the on-premises gateway 105 connected to the layer 2 communication tunnel 30. In an embodiment of this application, a source IP address of the IGMP Report packet is a private address 192.168.1.20 of an on-premises multicast member PM 1 (the same is true to the PM 2), a source MAC address is MAC of the PM 1, a destination IP address is a multicast group IP address 224.0.0.3, and a destination MAC address is a multicast group MAC address 01:00:5e:00:00:03.

Specifically, in an embodiment provided in this application, an outer packet header is added to the IGMP Report packet when the packet is sent to the layer 2 communication tunnel 30 through the on-premises gateway 105 connected to the layer 2 communication tunnel 30, a source IP address of the outer packet is the private address 200.51.3.30 of the on-premises gateway 105 connected to the layer 2 communication tunnel 30, a destination IP address is a private address 172.168.2.200 of the on-cloud gateway 205 connected to the layer 2 communication tunnel 30, a source MAC address is a MAC address of the on-premises gateway 105 connected to the layer 2 communication tunnel 30, and a destination MAC address is a MAC address of the on-cloud gateway 205 connected to the layer 2 communication tunnel 30. In an embodiment provided by the present invention, the layer 2 communication tunnel is implemented by using a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A508: The layer 2 gateway 200 updates the multicast group information.

Specifically, the layer 2 gateway 200 refreshes the multicast entry based on the received membership report packet (IGMP Report packet), and records the correspondence between the multicast group and the multicast group member.

A509: The VM 1 sends multicast packet traffic to the layer 2 gateway 200.

Specifically, the VM 1 sends the multicast packet traffic to the layer 2 gateway 200. In an embodiment provided in this application, the VM 1 records a multicast group private address 224.0.0.3, a source IP address of the multicast packet is a private address 192.168.1.10 of the VM 1, a destination IP address is a multicast group address 224.0.0.3, a source MAC address is VM 1 MAC, and a destination MAC address is a multicast group MAC address 01:00:5e:00:00:03.

A510: The layer 2 gateway 200 receives the multicast packet traffic.

Specifically, the layer 2 gateway 200 receives the multicast packet traffic, and parses out the multicast group information included in the multicast packet.

A511: The layer 2 gateway 200 replicates and forwards the multicast packet traffic to the on-premises data center.

Specifically, the layer 2 gateway 200 finds, in the multicast entry based on an inner destination IP address (a multicast group private address 192.168.0.4) in the multicast packet traffic and a multicast group MAC address, a correspondence between the addresses and an on-premises network segment including the multicast group members that are the PM 1 and the PM 2, parses the multicast packet traffic, and sends the parsed multicast packet traffic to the on-premises data center.

An outer packet header is added to the multicast packet traffic after the multicast packet traffic is sent to the layer 2 communication tunnel 30 through the on-cloud gateway 205 connected to the layer 2 communication tunnel 30, a source IP address of the outer packet is a private address 172.16.2.200 of the on-cloud gateway 205 connected to the layer 2 communication tunnel 30, a destination IP address is a private address 200.51.3.30 of the on-premises gateway 105 connected to the layer 2 communication tunnel 30, a source MAC address is a MAC address of the on-cloud gateway 205 connected to the layer 2 communication tunnel 30, and the destination MAC address is a MAC address of the on-premises gateway 105 connected to the layer 2 communication tunnel 30. In an embodiment provided in the present invention, the layer 2 communication tunnel is implemented based on a large layer 2 technology, for example, a virtual extensible local area network (Virtual eXtensible Local Area Network, VXLAN) or generic routing encapsulation (Generic Routing Encapsulation, GRE). In the layer 2 communication tunnel implemented through the VXLAN, the outer packet further carries VXLAN VNI information, and the information is configured by the tenant in an ESW connection. Specifically, in an embodiment of this application, the on-cloud gateway 205 and the on-premises gateway 105 are VTEP devices.

A512: The PM 1 and the PM 2 send a leave packet to the layer 2 gateway 200.

Multicast group members that are the PM 1 and the PM 2 send the leave packet (IGMP Leave packet) to a network. A destination IP address of the packet is 224.0.0.2. The layer 2 gateway 200 receives the leave packet.

A513: The layer 2 gateway 200 sends a group-specific query packet to the on-premises data center.

After receiving the leave packet, the layer 2 gateway 200 sends the group-specific query packet (IGMP Group-Specific Query packet) to the multicast group, to determine whether another group member exists in the multicast group. If no member replies within a period of time, the layer 2 gateway 200 considers that there is no member of the multicast group on the network segment and a corresponding IGMP entry is deleted.

A514: The layer 2 gateway 200 sends a notification packet to the cloud.

The layer 2 gateway determines that there is no another member in the multicast group, and sends a packet to the router 204 at the on-cloud data center 20. The packet is used to notify the router 204 that there is no another member of the multicast group at the on-cloud data center 20, and multicast traffic of the group is no longer forwarded to the network segment.

Optionally, in an embodiment provided in this application, the layer 2 gateway 200 undertakes a function of a last-hop router in the layer 2 network. Optionally, in an embodiment provided in this application, the layer 2 gateway 200 undertakes a multicast proxy function when IGMP proxy or an IGMP snooping protocol is enabled. Optionally, in an embodiment provided in this application, the on-cloud router 204 or the on-premises router 104 undertakes a function of a layer 3 device.

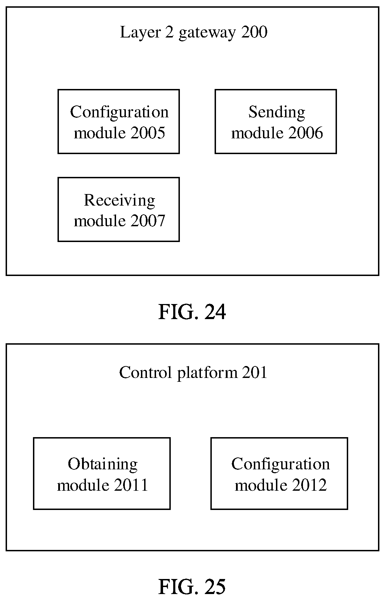

FIG. 24 is a diagram of an apparatus structure of a layer 2 gateway 200 for multicast communication in a hybrid cloud environment according to an embodiment of the present invention. As shown in FIG. 24, the layer 2 gateway 200 includes a configuration module 2005, a sending module 2006, and a receiving module 2007. The configuration module 2005 is configured to perform an action of configuring a routing rule in the foregoing embodiments, the sending module 2006 is configured to perform an action of sending a multicast packet in the foregoing embodiments, and the receiving module 2007 is configured to perform an action of receiving a multicast packet in the foregoing embodiments.

FIG. 25 is a diagram of an apparatus structure of a control platform 201 in a hybrid cloud environment according to an embodiment of the present invention. As shown in FIG. 25, the control platform 201 includes an obtaining module 2011 and a configuration module 2012. The obtaining module 2011 is configured to perform an action of obtaining multicast information in the foregoing embodiments, and the like. The configuration module 2012 is configured to perform an action of configuring a gateway in the foregoing embodiments, and the like.

It should be noted that the layer 2 gateway 200 in the foregoing embodiments is specifically implemented by software, a virtual machine, or a container that runs on a network node 204. However, this embodiment of the present invention is not limited thereto. The layer 2 gateway 200 may alternatively be implemented by using a general-purpose computing device. The layer 2 gateway 200 includes a processor 2006, a memory 2007, a first network interface 2008, a second network interface 2009, and a bus 2010. The memory 2007 stores program instructions, and the processor 2006 executes the program instructions to implement related functions of the layer 2 gateway 200 in the foregoing embodiments. It should be noted that, when the layer 2 gateway 200 is a general-purpose computing device, a VTEP device connected to the layer 2 gateway 200 in FIG. 18 may be implemented by using a VXLAN switch that has a switch function and a VXLAN encapsulation and decapsulation function. For example, the layer 2 gateway 200 may be a general-purpose computing device that implements network functions virtualization (Network Functions Virtualization, NFV).

A cloud management platform in a hybrid cloud environment according to an embodiment of the present invention includes a processor 2023, a memory 2024, a network interface 2025, and a bus 2026. The memory 2024 stores program instructions, and the processor 2023 executes the program instructions to implement the multicast communication method in the hybrid cloud environment in the foregoing embodiments.

An embodiment of the present invention further provides a computer program product for implementing a function of the foregoing layer 2 gateway, and a computer program product for implementing a function of the foregoing control platform. In addition, the foregoing computer program product includes a computer-readable storage medium that stores program code, and instructions included in the program code is used to perform the method procedure described in any one of the foregoing method embodiments. A person of ordinary skill in the art may understand that, the foregoing storage medium includes various non-transitory (non-transitory) machinereadable media that can store program code, such as a USB flash drive, a removable hard disk, a magnetic disk, an optical disc, a random access memory (Random-Access Memory, RAM), a solid-state drive (Solid State Disk, SSD), or a non-volatile memory (non-volatile memory).

It should be noted that embodiments provided in this application are merely examples. A person skilled in the art may clearly know that, for convenience and conciseness of description, in the foregoing embodiments, the embodiments emphasize different aspects, and for a part not described in detail in one embodiment, refer to related descriptions in another embodiment. Features disclosed in embodiments, claims, and accompanying drawings of the present invention may exist independently or exist in a combination. Features described in a hardware form in embodiments of the present invention may be executed by software, and vice versa. This is not limited herein.

## Claims

1. A multicast communication method in a hybrid cloud environment, wherein the method is applied to a control platform, the control platform is configured for multicast communication between a first data center and a second data center, the first data center is configured to provide a public cloud service, the second data center is configured to provide a non-public cloud service, the first data center is provided with a gateway, the gateway is remotely connected to a second subnet of the second data center through a communication tunnel and is connected to a first subnet of the first data center, the first subnet and the second subnet have a same private network segment, and the method comprises:
obtaining, by the control platform from a multicast configuration interface, multicast member information for the gateway or a selection of enabling, for the gateway, a function of performing learning based on a layer 2 dynamic multicast protocol that is input by a tenant, wherein the multicast member information indicates the gateway to configure a correspondence between a multicast group and a multicast member, and the multicast configuration interface is disposed on the control platform; and
configuring, by the control platform, the gateway based on the multicast member information or the selection of enabling, for the gateway, the function of performing learning based on the layer 2 dynamic multicast protocol, wherein when the tenant inputs the multicast member information, the control platform configures the gateway to record the correspondence between a multicast group and a multicast member; or when the tenant inputs the selection of enabling, for the gateway, the function of performing learning based on the layer 2 dynamic multicast protocol, the control platform configures the gateway to enable the function of performing learning based on the layer 2 dynamic multicast protocol, and the layer 2 dynamic multicast protocol indicates the gateway to dynamically learn of the correspondence between a multicast group and a multicast member.

2. The method according to claim 1, wherein the layer 2 dynamic multicast protocol comprises an internet group management protocol IGMP.

3. The method according to claim 1 or 2, wherein the correspondence between a multicast group and a multicast member indicates that the multicast member comprises a first device in the first subnet, a second device in the second subnet, and a third device in the second subnet, and the method further comprises:
configuring, by the control platform, the gateway to receive a multicast packet sent by the first device in the first subnet; and
configuring, by the control platform, the gateway to send the multicast packet to the second subnet through the communication tunnel according to a multicast routing rule.

4. The method according to any one of claims 1 to 3, wherein the correspondence between a multicast group and a multicast member further indicates that the multicast member comprises a fourth device and a fifth device in the first subnet, and the method further comprises:
configuring, by the control platform, the gateway to receive a multicast packet sent by the first device in the first subnet; and
configuring, by the control platform, the gateway to send the multicast packet to the fourth device and the fifth device according to the multicast routing rule.

5. The method according to claim 1 or 2, wherein the correspondence between a multicast group and a multicast member indicates that the multicast member comprises a first device in the second subnet, a second device in the first subnet, and a third device in the first subnet, and the method further comprises:
configuring, by the control platform, the gateway to receive a multicast packet sent by the first device in the second subnet through the communication tunnel; and
configuring, by the control platform, the gateway to send the multicast packet to the second device and the third device according to the multicast routing rule.

6. A control platform in a hybrid cloud environment, configured to configure multicast communication between a first data center and a second data center, wherein the first data center is configured to provide a public cloud service, the second data center is configured to provide a non-public cloud service, the first data center is provided with a gateway, the gateway is remotely connected to a second subnet of the second data center through a communication tunnel and is connected to a first subnet of the first data center, the first subnet and the second subnet have a same private network segment, and the control platform comprises:
an obtaining module, configured to obtain, from a multicast configuration interface, multicast member information for the gateway or a selection of enabling, for the gateway, a function of performing learning based on a layer 2 dynamic multicast protocol that is input by a tenant, wherein the multicast member information indicates the gateway to configure a correspondence between a multicast group and a multicast member, and the multicast configuration interface is disposed on the control platform; and
a configuration module, configured to configure the gateway based on the multicast member information or the selection of enabling, for the gateway, the function of performing learning based on the layer 2 dynamic multicast protocol, wherein when the tenant inputs the multicast member information, the control platform configures the gateway to record the correspondence between a multicast group and the multicast member; or when the tenant inputs the selection of enabling, for the gateway, the function of performing learning based on the layer 2 dynamic multicast protocol, the control platform configures the gateway to enable the function of performing learning based on the layer 2 dynamic multicast protocol, and the layer 2 dynamic multicast protocol indicates the gateway to dynamically learn of the correspondence between a multicast group and a multicast member.

7. The control platform according to claim 6, wherein the layer 2 dynamic multicast protocol comprises an internet group management protocol IGMP.

8. The method according to claim 6 or 7, wherein the correspondence between a multicast group and a multicast member indicates that the multicast member comprises a first device in the first subnet, a second device in the second subnet, and a third device in the second subnet;
the configuration module is further configured to configure the gateway to receive a multicast packet sent by the first device in the first subnet; and
the configuration module is further configured to configure the gateway to send the multicast packet to the second subnet through the communication tunnel according to the multicast routing rule.

9. The control platform according to any one of claims 6 to 8, wherein the correspondence between a multicast group and a multicast member further indicates that the multicast member comprises a fourth device and a fifth device in the first subnet;
the configuration module is further configured to configure the gateway to receive a multicast packet sent by the first device in the first subnet; and
the configuration module is further configured to configure the gateway to send the multicast packet to the fourth device and the fifth device according to the multicast routing rule.

10. The control platform according to claim 6 or 7, wherein the correspondence between a multicast group and a multicast member indicates that the multicast member comprises a first device in the second subnet, a second device in the first subnet, and a third device in the first subnet;
the configuration module is further configured to configure the gateway to receive a multicast packet sent by the first device in the second subnet through the communication tunnel; and
the configuration module is further configured to configure the gateway to send the multicast packet to the second device and the third device according to the multicast routing rule.

11. A computing device cluster, comprising at least one computing device, wherein each computing device comprises a processor and a memory, and the processor of the at least one computing device is configured to execute instructions stored in the memory of the at least one computing device, to cause the computing device cluster to perform the method according to any one of claims 1 to 5.

12. A computer program product, comprising program code, wherein instructions comprised in the program code are executed by a computer to perform the method according to any one of claims 1 to 5.

13. A computer-readable storage medium, comprising computer program instructions, wherein when the computer program instructions are run on a computer, the computer is caused to perform the method according to any one of claims 1 to 5.
